# EUROPEAN PATENT APPLICATION

(11) **EP 4 192 160 A1**
(43) Date of publication of application: **07.06.2023**
(21) Application number: 20949168.7
(22) Date of filing: 14.08.2020
(51) Int. Cl.: H04W 72/04

(54) **DATA TRANSMISSION METHOD AND COMMUNICATION APPARATUS**

(71) Applicant: Huawei Technologies Co., Ltd., Shenzhen, Guangdong 518129 (CN)
(72) Inventor: ZHANG, Xi, Shenzhen, Guangdong 518129 (CN); GUAN, Peng, Shenzhen, Guangdong 518129 (CN); FAN, Bo, Shenzhen, Guangdong 518129 (CN); CHEN, Lei, Shenzhen, Guangdong 518129 (CN); GAO, Kuandong, Shenzhen, Guangdong 518129 (CN)
(74) Representative: Isarpatent
(86) International application number: PCT/CN2020/109324
(87) International publication number: WO 2022/032670

(57) **Abstract**

This application provides a data transmission method and an apparatus. A single parameter indicates transmit beam information for uplink transmission and receive beam information for downlink transmission of a terminal device together, so that an uplink and downlink beam indication procedure can be simplified, to reduce signaling overheads. The data transmission method includes: receiving first indication information, where the first indication information indicates a terminal device to perform data transmission based on a first parameter, and the first parameter indicates transmit beam information for uplink transmission and/or receive beam information for downlink transmission; and performing data transmission based on the transmit beam information and/or the receive beam information that are/is indicated by the first parameter.

## Description

### TECHNICAL FIELD

This application relates to the communications field, and more specifically, to a data transmission method and an apparatus.

### BACKGROUND

In a 5th generation (5th generation, 5G) mobile communication system, high-frequency communication may be used. For example, data transmission is performed by using a super high frequency band (>6 GHz) signal. A main problem of the high-frequency communication is that signal energy sharply decreases as a transmission distance increases, and this results in a short signal transmission distance. To resolve this problem, an analog beam technology is used in the high-frequency communication. Weighted processing is performed on an antenna array, the signal energy is concentrated in a small angle range, to form a signal similar to a light beam (referred to as an analog beam, a beam for short), so that the transmission distance is extended. Both a network device and a terminal device need to perform transmission by using the beam.

Uplink and downlink data transmission needs to be performed by using a specific beam. The specific beam to be used is specified by the network device for the terminal device. In downlink transmission, the network device needs to notify the terminal device of a receive beam for receiving. An indication of the downlink receive beam is specified by using a transmission configuration index (transmission configuration index, TCI)-state (state). In the uplink transmission, the network device needs to notify the terminal device of a transmit beam for sending. An indication of the uplink transmit beam is specified by using a spatial relation (spatial relation).

Currently, the network device indicates the beams for the uplink and downlink transmission completely independently. The spatial relation is for indication in an uplink, and the TCI-state is for indication in a downlink. Independent procedures are for uplink and downlink beam indication. The procedures are complex, and signaling overheads are high. Therefore, how to perform efficient uplink and downlink beam indication is an urgent problem to be resolved.

### SUMMARY

This application provides a data transmission method and an apparatus. A single parameter indicates transmit beam information for uplink transmission and receive beam information for downlink transmission of a terminal device together, so that an uplink and downlink beam indication procedure can be simplified, to reduce signaling overheads.

According to a first aspect, a data transmission method is provided. The method provided in the first aspect may be performed by a terminal device, or may be performed by a chip configured in the terminal device. This is not limited in this application.

The method includes: receiving first indication information, where the first indication information indicates a terminal device to perform data transmission based on a first parameter, and the first parameter indicates transmit beam information for uplink transmission and/or receive beam information for downlink transmission; and performing data transmission based on the transmit beam information and/or the receive beam information that are/is indicated by the first parameter.

Therefore, in this embodiment of this application, the terminal device may perform data transmission based on the transmit beam information and/or the receive beam information that are/is indicated by the first parameter. Because the first parameter indicates the transmit beam information for the uplink transmission and/or the receive beam information for the downlink transmission, in this embodiment of this application, a single parameter can indicate the transmit beam information for the uplink transmission and the receive beam information for the downlink transmission of the terminal device together. Compared with a conventional technology in which different parameters independently indicate the transmit beam information for the uplink transmission and the receive beam information for the downlink transmission, this application can simplify an uplink and downlink beam indication procedure, to reduce signaling overheads.

For example, when the method is performed by the chip configured in the terminal device, the action of "receiving first indication information" may also be described as "inputting first indication information". This is not limited in this application.

In this embodiment of this application, that the terminal device performs data transmission based on the transmit beam information indicated by the first parameter means that the terminal device sends uplink data based on a transmit beam corresponding to the transmit beam information indicated by the first parameter; and that the terminal device performs data transmission based on the receive beam information indicated by the first parameter means that the terminal device receives downlink data based on a receive beam corresponding to the receive beam information indicated by the first parameter.

With reference to the first aspect, in some implementations of the first aspect, the first parameter includes a single target reference signal resource, and the target reference signal resource indicates both the transmit beam information for the uplink transmission and the receive beam information for the downlink transmission. In this way, the terminal device may determine both the transmit beam for the uplink transmission and the receive beam for the downlink transmission based on the single target reference signal resource in the first parameter.

In this case, the first parameter has a function of indicating both the transmit beam information for the uplink transmission and the receive beam information for the downlink transmission.

With reference to the first aspect, in some implementations of the first aspect, the first parameter includes a single target reference signal resource, and the target reference resource indicates the transmit beam information for the uplink transmission or the receive beam information for the downlink transmission. In this way, the terminal device may determine the transmit beam for the uplink transmission or the receive beam for the downlink transmission based on the single target reference signal resource in the first parameter.

In this case, the first parameter has a function of indicating the transmit beam information for the uplink transmission or the receive beam information for the downlink transmission. In other words, at the same time, the single target reference signal resource may indicate only the transmit beam information for the uplink transmission, or may indicate only the receive beam information for the downlink transmission.

With reference to the first aspect, in some implementations of the first aspect, the first parameter includes a single target reference signal resource, and the target reference resource indicates the transmit beam information for the uplink transmission or the receive beam information for the downlink transmission, or indicate both the transmit beam information for the uplink transmission and the receive beam information for the downlink transmission. In this way, based on the single target reference signal resource in the first parameter, the terminal device may determine the transmit beam for the uplink transmission or the receive beam for the downlink transmission, or determine both the transmit beam information for the uplink transmission and the receive beam information for the downlink transmission.

In this case, the first parameter has a function of indicating the transmit beam information for the uplink transmission or the receive beam information for the downlink transmission or indicating both the transmit beam information for the uplink transmission and the receive beam information for the downlink transmission.

In an example, the single target reference signal resource may be an uplink reference signal resource (for example, an SRS resource) or a downlink reference signal resource (for example, an SSB/CSI-RS/DMRS/TRS/PTRS resource). This is not limited.

With reference to the first aspect, in some implementations of the first aspect, the first parameter includes a first target reference signal resource and a second target reference signal resource, the first target reference signal resource indicates the transmit beam information for the uplink transmission, and the second target reference signal resource indicates the receive beam information for the downlink transmission. In this way, the terminal device may determine both the transmit beam for the uplink transmission and the receive beam for the downlink transmission based on the first target reference signal resource and the second target reference signal resource in the first parameter.

In this case, the first parameter has a function of indicating both the transmit beam information for the uplink transmission and the receive beam information for the downlink transmission.

With reference to the first aspect, in some implementations of the first aspect, the indicating the transmit beam information for the uplink transmission and the indicating the receive beam information for the downlink transmission are determined based on an indication order of the first target reference signal resource and the second target reference signal resource in the first parameter. The indication order may be a sorting order (for example, an order or a reverse order) of the target reference signal resources in the first parameter.

Therefore, the terminal device may determine, based on the indication order of the first target reference signal and the second target reference signal in the first parameter, which target reference signal resource indicates the transmit beam information for the uplink transmission and which target reference signal resource indicates the receive beam information for the downlink transmission.

With reference to the first aspect, in some implementations of the first aspect, the first parameter further indicates a type of a target reference signal resource in the first parameter, and the type of the target reference signal resource includes at least one of the following:
indicating the transmit beam information for the uplink transmission;
indicating the receive beam information for the downlink transmission; and
indicating both the transmit beam information for the uplink transmission and the receive beam information for the downlink transmission.

In this way, the terminal device may determine, based on the type that is of the target reference signal resource and that is indicated by the first parameter, whether the target reference signal resource indicates the transmit beam information for the uplink transmission, indicates the receive beam information for the downlink transmission, or indicates both the transmit beam information for the uplink transmission and the receive beam information for the downlink transmission.

In an example, when the first parameter includes a single target reference signal resource, and the single target reference signal resource indicates both the transmit beam information for the uplink transmission and the receive beam information for the downlink transmission, the type of the target reference signal resource indicates both the transmit beam information for the uplink transmission and the receive beam information for the downlink transmission.

In another example, when the first parameter includes a single target reference signal resource, and the single target reference signal resource indicates the transmit beam information for the uplink transmission or the receive beam information for the downlink transmission, types of the single target reference signal resource include two types: indicating the transmit beam information for the uplink transmission and indicating the receive beam information for the downlink transmission. In other words, in this case, the first parameter may indicate that the type of the single target reference signal resource is either indicating the transmit beam information for the uplink transmission or indicating the receive beam information for the downlink transmission.

In another example, when the first parameter includes a single target reference signal resource, and the single target reference signal resource indicates the transmit beam information for the uplink transmission or the receive beam information for the downlink transmission, or indicates both the transmit beam information for the uplink transmission and the receive beam information for the downlink transmission, types of the single target reference signal resource include three types: indicating the transmit beam information for the uplink transmission, indicating the receive beam information for the downlink transmission, and indicating both the transmit beam information for the uplink transmission and the receive beam information for the downlink transmission. In other words, in this case, the first parameter may indicate that the type of the single target reference signal resource is one of indicating the transmit beam information for the uplink transmission, indicating the receive beam information for the downlink transmission, and indicating both the transmit beam information for the uplink transmission and the receive beam information for the downlink transmission.

In another example, when the first parameter includes two target reference signal resources, a type of one target reference signal resource is indicating the transmit beam information for the uplink transmission, and a type of the other target reference signal resource is indicating the receive beam information for the downlink transmission.

With reference to the first aspect, in some implementations of the first aspect, the first parameter further includes a type field corresponding to the target reference signal resource, and the type field indicates the type of the target reference signal resource corresponding to the type field. In this way, the type field may explicitly indicate the type of the target reference signal resource.

In some embodiments, when the first parameter includes a single target reference signal resource, if the type of the target reference signal resource is not indicated, the terminal device may consider by default that the type of the target reference signal resource is indicating both the transmit beam information for the uplink transmission and the receive beam information for the downlink transmission.

With reference to the first aspect, in some implementations of the first aspect, the first parameter further includes a QCL type of the target reference signal resource, and the QCL type indicates the type of the target reference signal resource. In other words, the QCL type of the target reference signal resource may indicate the type of the target reference signal resource.

The QCL type includes one or more of a first QCL type, a second QCL type, and a third QCL type;
the first QCL type indicates that the target reference signal resource indicates the transmit beam information for the uplink transmission;
the second QCL type indicates that the target reference signal resource indicates the receive beam information for the downlink transmission; and
the third QCL type indicates that the target reference signal resource indicates the transmit beam information for the uplink transmission and the receive beam information for the downlink transmission.

In this way, the terminal device may determine, based on the QCL type of the target reference signal resource in the first parameter, whether the target reference signal resource indicates the transmit beam information for the uplink transmission, indicates the receive beam information for the downlink transmission, or indicates both the transmit beam information for the uplink transmission and the receive beam information for the downlink transmission.

In an example, when the first parameter includes a single target reference signal resource, and the single target reference signal resource indicates both the transmit beam information for the uplink transmission and the receive beam information for the downlink transmission, the QCL type of the target reference signal resource is the third QCL type.

In another example, when the first parameter includes a single target reference signal resource, and the single target reference signal resource indicates the transmit beam information for the uplink transmission or the receive beam information for the downlink transmission, QCL types of the single target reference signal resource include two types: the first QCL type and the second QCL type. In other words, in this case, the first parameter may indicate that the QCL type of the single target reference signal resource is either the first QCL type or the second QCL type.

In another example, when the first parameter includes a single target reference signal resource, and the single target reference signal resource indicates the transmit beam information for the uplink transmission or the receive beam information for the downlink transmission or indicates both the transmit beam information for the uplink transmission and the receive beam information for the downlink transmission, types of the single target reference signal resource include three types: the first QCL type, the second QCL type, and the third QCL type. In other words, in this case, the first parameter may indicate that the QCL type of the single target reference signal resource is one of the first QCL type, the second QCL type, and the third QCL type.

In another example, when the first parameter includes two target reference signal resources, a QCL type of one target reference signal resource is the first QCL type, and a type of the other target reference signal resource is the second QCL type,

With reference to the first aspect, in some implementations of the first aspect, the first parameter further includes a QCL type of the target reference signal resource, the QCL type includes typeD, and typeD indicates that the target reference signal resource indicates the transmit beam information for the uplink transmission or the receive beam information for the downlink transmission.

In this way, in this embodiment of this application, the first parameter can indicate the transmit beam information for the uplink transmission or the receive beam information for the downlink transmission without introducing a new QCL type but by extending or modifying a function of QCL information of typeD to indicating either of the transmit beam information for the uplink transmission and the receive beam information for the downlink transmission.

With reference to the first aspect, in some implementations of the first aspect, if the first parameter is indicated by signaling for scheduling the uplink transmission, typeD indicates that the target reference signal resource indicates the transmit beam information for the uplink transmission; or
if the first parameter is indicated by signaling for scheduling the downlink transmission, typeD indicates that the target reference signal resource indicates the receive beam information for the downlink transmission.

In this way, in this embodiment of this application, whether typeD indicates that the target reference signal resource indicates the transmit beam information for the uplink transmission or indicates that the target reference signal resource indicates the receive beam information for the downlink transmission can be further determined based on whether the first parameter is indicated by the signaling for scheduling the uplink transmission or indicated by the signaling for scheduling the downlink transmission

With reference to the first aspect, in some implementations of the first aspect, the first parameter further includes first information, and the first information indicates whether typeD is for determining the transmit beam information for the uplink transmission or for determining the receive beam information for the downlink transmission.

In this way, in this embodiment of this application, whether typeD is for determining the transmit beam information for the uplink transmission or determining the receive beam information for the downlink transmission can be further determined based on an indication of the first information.

With reference to the first aspect, in some implementations of the first aspect, the first parameter further includes a QCL type of the target reference signal resource, the QCL type includes typeD, and typeD indicates that the target reference signal resource indicates both the transmit beam information for the uplink transmission and the receive beam information for the downlink transmission.

In this way, in this embodiment of this application, the first parameter can indicate both the transmit beam information for the uplink transmission and the receive beam information for the downlink transmission without introducing a new QCL type but by extending or modifying a function of QCL information of typeD to indicating both the transmit beam information for the uplink transmission and the receive beam information for the downlink transmission.

With reference to the first aspect, in some implementations of the first aspect, the method further includes:
sending first capability information, where the first capability information indicates that the terminal device supports use of QCL information of typeD to indicate both the transmit beam information for the uplink transmission and/or the receive beam information for the downlink transmission.

In this way, a network device may determine, based on the first capability information, that the terminal device supports use of the QCL information of typeD to indicate both the transmit beam information for the uplink transmission and/or the receive beam information for the downlink transmission, and then may use, based on the first capability information, the QCL information of typeD to indicate both the transmit beam information for the uplink transmission and the receive beam information for the downlink transmission.

With reference to the first aspect, in some implementations of the first aspect, the first parameter further includes a QCL type of the target reference signal resource, the QCL type includes typeD, and typeD indicates that the target reference signal resource indicates common beam information. The common beam information may be for determining the transmit beam information for the uplink transmission and/or the receive beam information for the downlink transmission. In this way, in this embodiment of this application, the first parameter indicates the common beam information without introducing a new QCL type but by extending or modifying a function of QCL information of typeD.

With reference to the first aspect, in some implementations of the first aspect, the first parameter further includes a QCL type of the target reference signal resource, the QCL type includes a first QCL type, and the first QCL type indicates that the target reference signal resource indicates the transmit beam information for the uplink transmission.

In this way, in this embodiment of this application, a new QCL type (for example, the first QCL type or typeE) can indicate the transmit beam information for the uplink transmission, so that the first parameter indicates the transmit beam information for the uplink transmission.

With reference to the first aspect, in some implementations of the first aspect, the first parameter further includes a QCL type of the target reference signal resource, the QCL type includes a third QCL type, and the third QCL type indicates that the target reference signal resource indicates both the transmit beam information for the uplink transmission and the receive beam information for the downlink transmission.

In this way, in this embodiment of this application, a new QCL type (for example, the third QCL type or typeF) can indicate both the transmit beam information for the uplink transmission and the receive beam information for the downlink transmission, so that the first parameter indicates both the transmit beam information for the uplink transmission and the receive beam information for the downlink transmission.

With reference to the first aspect, in some implementations of the first aspect, the first parameter further includes a QCL type of the target reference signal resource, the QCL type includes a fourth QCL type, and the fourth QCL type indicates that the target reference signal resource indicates common beam information.

In this way, in this embodiment of this application, a new QCL type (for example, the fourth QCL type or typeG) can indicate the common beam information

With reference to the first aspect, in some implementations of the first aspect, the common beam information includes one or more of the following features:
being for both the uplink transmission and the downlink transmission;
being for transmission of a plurality of channels, where the plurality of channels include at least a control channel and a data channel; and
being for transmission of a plurality of cells.

With reference to the first aspect, in some implementations of the first aspect, the method further includes:
sending second capability information, where the second capability information indicates that the terminal device supports use of the fourth QCL type to indicate the common beam information, or the second capability information indicates that the terminal device supports use of a common beam.

In this way, a network device may determine, based on the second capability information, that the terminal device supports use of QCL information of the fourth QCL type to indicate the common beam information, and then may use, based on the second capability information, the QCL information of the fourth QCL type to indicate the common beam information.

With reference to the first aspect, in some implementations of the first aspect, the first parameter further indicates a type of the first parameter, and the type of the first parameter includes at least one of the following:
indicating the transmit beam information for the uplink transmission;
indicating the receive beam information for the downlink transmission; and
indicating both the transmit beam information for the uplink transmission and the receive beam information for the downlink transmission.

In this way, the terminal device may determine, based on the type that is of the first parameter and that is indicated by the first parameter, whether the first parameter indicates the transmit beam information for the uplink transmission, indicates the receive beam information for the downlink transmission, or indicates both the transmit beam information for the uplink transmission and the receive beam information for the downlink transmission. In some embodiments, for example, when the first parameter includes a single target reference signal resource, the type of the target reference signal resource may also be described/replaced with the type of the first parameter.

With reference to the first aspect, in some implementations of the first aspect, the first parameter includes at least one of the following information:
a component carrier/cell identifier of a cell to which a target reference signal belongs, a bandwidth part BWP identifier of the target reference signal, the target reference signal resource, the QCL type, type information of the first parameter, type information of the target reference signal resource, a path loss measurement reference signal resource, a power control parameter, an identifier of a terminal antenna panel, an identifier of a transmission site, a physical cell identifier PCI, and a sounding reference signal SRS resource for the uplink transmission.

With reference to the first aspect, in some implementations of the first aspect, the method further includes:
sending third capability information, where the third capability information indicates that the terminal device supports use of the first parameter to indicate the transmit beam information for the uplink transmission and/or the receive beam information for the downlink transmission.

In this way, the network device may determine, based on the third capability information, that the terminal device supports use of the first parameter to indicate the transmit beam information for the uplink transmission and/or the receive beam information for the downlink transmission, and then may use, based on the third capability information, the first parameter to indicate the transmit beam information for the uplink transmission and/or the receive beam information for the downlink transmission.

With reference to the first aspect, in some implementations of the first aspect, the method further includes:
receiving second indication information, where the second indication information indicates that the terminal device to use the first parameter to indicate the transmit beam information for the uplink transmission and/or the receive beam information for the downlink transmission.

With reference to the first aspect, in some implementations of the first aspect, the first parameter is indicated by one or more of the following signaling:
downlink control information DCI;
a media access control MAC control element CE; and
radio resource control RRC signaling.

With reference to the first aspect, in some implementations of the first aspect, when the first parameter includes the physical cell identifier, the first parameter is indicated by the RRC signaling;
when the first parameter includes at least two target reference signal resources, the first parameter is indicated by the MAC CE signaling or the RRC signaling;
when the first parameter includes the path loss measurement reference signal resource or the power control parameter, the first parameter is indicated by the RRC signaling or the MCE CE signaling;
when the first parameter includes the identifier of the terminal antenna panel, the first parameter is indicated by the RRC signaling or the MAC CE signaling;
when the first parameter includes the identifier of the transmission site, the first parameter is indicated by the RRC signaling, the MACE signaling, or the DCI; and
when the first parameter includes a new QCL type, the first parameter is indicated by the RRC signaling, a MAC CE signal, or the DCI signaling.

In this embodiment of this application, because times-to-apply of different content information in the first parameter are different, different signaling (for example, the RRC signaling, the MAC CE signaling, or the DCI signaling) may be for sending the first parameter carrying specific content, to adapt to a time-to-apply of information about the specific content in the first parameter.

With reference to the first aspect, in some implementations of the first aspect, the performing data transmission based on the transmit beam information and/or the receive beam information that are/is indicated by the first parameter includes:
performing, after a time-to-apply after an indication moment of the first parameter, data transmission based on the transmit beam information and/or the receive beam information that are/is indicated by the first parameter, where the time-to-apply is related to content of the first parameter.

With reference to the first aspect, in some implementations of the first aspect, when the first parameter includes the PCI, the time-to-apply is a measurement gap of neighboring cell measurement/neighboring frequency measurement. In this way, the first parameter is applicable after neighboring cell/neighboring frequency measurement is completed.

Alternatively, when the first parameter includes the identifier of the terminal antenna panel, the time-to-apply is a time required for activation of the terminal antenna panel. In this way, the first parameter is applicable after the panel is activated.

Alternatively, when the first parameter includes the identifier of the transmission site, the time-to-apply is a time required for uplink timing of the transmission site. In this way, the first parameter is applicable after uplink timing of a TRP.

Alternatively, when the first parameter includes the path loss measurement reference signal resource, the time-to-apply is a time required for measurement of a path loss reference signal. In this way, the first parameter is applicable after the path loss reference signal is measured.

With reference to the first aspect, in some implementations of the first aspect, when each of a plurality of pieces of information included in the first parameter corresponds to one time-to-apply, a largest time-to-apply in a plurality of times-to-apply corresponding to the plurality of pieces of information is used as the time-to-apply of the first parameter. In this way, it can be ensured that all information in the first parameter has been applicable.

With reference to the first aspect, in some implementations of the first aspect, when each of a plurality of pieces of information included in the first parameter corresponds to one time-to-apply, each of the plurality of pieces of information is applicable by using the corresponding time-to-apply. In this way, the first parameter is applicable as soon as possible after indication.

With reference to the first aspect, in some implementations of the first aspect, when each of a plurality of pieces of information included in the first parameter corresponds to one time-to-apply, each of the plurality of pieces of information is applicable by using the corresponding time-to-apply. In this way, each piece of information in the first parameter is applicable as soon as possible.

According to a second aspect, a data transmission method is provided. The method provided in the second aspect may be performed by a network device, or may be performed by a chip configured in the network device. This is not limited in this application.

The method includes: determining first indication information, where the first indication information indicates a terminal device to perform data transmission based on a first parameter, and the first parameter indicates transmit beam information for uplink transmission and/or receive beam information for downlink transmission; and sending the first indication information to the terminal device.

For example, when the method is performed by the chip configured in the network device, the action of "sending the first indication information" may also be described as "outputting the first indication information". This is not limited in this application.

The method in the second aspect may also be described as: sending first indication information to a terminal device, where the first indication information indicates the terminal device to perform data transmission based on a first parameter, and the first parameter indicates transmit beam information for uplink transmission and/or receive beam information for downlink transmission.

In some optional embodiments, the network device may further receive uplink transmission data from the terminal device, where the uplink transmission data is sent by the terminal device based on the transmit beam information that is for the uplink transmission and that is indicated by the first parameter. For example, the network device may receive the uplink transmission data by using the receive beam information corresponding to the transmit beam information that is for the uplink transmission and that is in the first parameter indicated by the first indication information.

In some optional embodiments, the network device may further send downlink transmission data to the terminal device, and the terminal device may receive the downlink transmission data based on the receive beam information that is for the downlink transmission and that is indicated by the first parameter. For example, the network device may send the downlink transmission data by using the transmit beam information corresponding to the receive beam information that is for the downlink transmission and that is in the first parameter indicated by the first indication information.

In this embodiment of this application, that the network device receives the uplink transmission data from the terminal device by using the receive beam information corresponding to the transmit beam information indicated by the first parameter means that the network device receives the uplink transmission data by using a receive beam corresponding to the receive beam information; and that the network device sends the downlink transmission data to the terminal device by using the transmit beam information corresponding to the receive beam information indicated by the first parameter means that the network device sends the downlink transmission data based on a transmit beam corresponding to the transmit beam information.

With reference to the second aspect, in some implementations of the second aspect, the first parameter includes a single target reference signal resource, and the target reference signal resource indicates both the transmit beam information for the uplink transmission and the receive beam information for the downlink transmission.

With reference to the second aspect, in some implementations of the second aspect, the first parameter includes a single target reference signal resource, and the target reference resource indicates the transmit beam information for the uplink transmission or the receive beam information for the downlink transmission.

With reference to the second aspect, in some implementations of the second aspect, the first parameter includes a single target reference signal resource, and the target reference resource indicates the transmit beam information for the uplink transmission or the receive beam information for the downlink transmission, or indicate both the transmit beam information for the uplink transmission and the receive beam information for the downlink transmission.

With reference to the second aspect, in some implementations of the second aspect, the first parameter includes a first target reference signal resource and a second target reference signal resource, the first target reference signal resource indicates the transmit beam information for the uplink transmission, and the second target reference signal resource indicates the receive beam information for the downlink transmission.

With reference to the second aspect, in some implementations of the second aspect, the indicating the transmit beam information for the uplink transmission and the indicating the receive beam information for the downlink transmission are determined based on an indication order of the first target reference signal resource and the second target reference signal resource in the first parameter.

With reference to the second aspect, in some implementations of the second aspect, the first parameter further indicates a type of a target reference signal resource in the first parameter, and the type of the target reference signal resource includes at least one of the following:
indicating the transmit beam information for the uplink transmission;
indicating the receive beam information for the downlink transmission; and
indicating both the transmit beam information for the uplink transmission and the receive beam information for the downlink transmission.

With reference to the second aspect, in some implementations of the second aspect, the first parameter further includes a type field corresponding to the target reference signal resource, and the type field indicates the type of the target reference signal resource corresponding to the type field.

With reference to the second aspect, in some implementations of the second aspect, the first parameter further includes a QCL type of the target reference signal resource, and the QCL type indicates the type of the target reference signal resource;
the QCL type includes one or more of a first QCL type, a second QCL type, and a third QCL type;
the first QCL type indicates that the target reference signal resource indicates the transmit beam information for the uplink transmission;
the second QCL type indicates that the target reference signal resource indicates the receive beam information for the downlink transmission; and
the third QCL type indicates that the target reference signal resource indicates the transmit beam information for the uplink transmission and the receive beam information for the downlink transmission.

With reference to the second aspect, in some implementations of the second aspect, the first parameter further includes a QCL type of the target reference signal resource, the QCL type includes typeD, and typeD indicates that the target reference signal resource indicates the transmit beam information for the uplink transmission or the receive beam information for the downlink transmission.

With reference to the second aspect, in some implementations of the second aspect, if the first parameter is indicated by signaling for scheduling the uplink transmission, typeD indicates that the target reference signal resource indicates the transmit beam information for the uplink transmission; or
if the first parameter is indicated by signaling for scheduling the downlink transmission, typeD indicates that the target reference signal resource indicates the receive beam information for the downlink transmission.

With reference to the second aspect, in some implementations of the second aspect, the first parameter further includes first information, and the first information indicates whether typeD is for determining the transmit beam information for the uplink transmission or for determining the receive beam information for the downlink transmission.

With reference to the second aspect, in some implementations of the second aspect, the first parameter further includes a QCL type of the target reference signal resource, the QCL type includes typeD, and typeD indicates that the target reference signal resource indicates both the transmit beam information for the uplink transmission and the receive beam information for the downlink transmission.

With reference to the second aspect, in some implementations of the second aspect, the method further includes:
receiving first capability information, where the first capability information indicates that the terminal device supports use of QCL information of typeD to indicate both the transmit beam information for the uplink transmission and/or the receive beam information for the downlink transmission.

With reference to the second aspect, in some implementations of the second aspect, the first parameter further includes a QCL type of the target reference signal resource, the QCL type includes a first QCL type, and the first QCL type indicates that the target reference signal resource indicates the transmit beam information for the uplink transmission.

With reference to the second aspect, in some implementations of the second aspect, the first parameter further includes a QCL type of the target reference signal resource, the QCL type includes a third QCL type, and the third QCL type indicates that the target reference signal resource indicates both the transmit beam information for the uplink transmission and the receive beam information for the downlink transmission.

With reference to the second aspect, in some implementations of the second aspect, the first parameter further includes a QCL type of the target reference signal resource, the QCL type includes a fourth QCL type, and the fourth QCL type indicates that the target reference signal resource indicates common beam information.

With reference to the second aspect, in some implementations of the second aspect, the common beam information includes one or more of the following features:
being for both the uplink transmission and the downlink transmission;
being for transmission of a plurality of channels, where the plurality of channels include at least a control channel and a data channel; and
being for transmission of a plurality of cells.

With reference to the second aspect, in some implementations of the second aspect, the method further includes:
receiving second capability information, where the second capability information indicates that the terminal device supports use of the fourth QCL type to indicate the common beam information, or the second capability information indicates that the terminal device supports use of a common beam.

With reference to the second aspect, in some implementations of the second aspect, the first parameter further indicates a type of the first parameter, and the type of the first parameter includes at least one of the following:
indicating the transmit beam information for the uplink transmission;
indicating the receive beam information for the downlink transmission; and
indicating both the transmit beam information for the uplink transmission and the receive beam information for the downlink transmission.

With reference to the second aspect, in some implementations of the second aspect, the first parameter includes at least one of the following information:
a component carrier/cell identifier of a cell to which a target reference signal belongs, a bandwidth part BWP identifier of the target reference signal, the target reference signal resource, the QCL type, type information of the first parameter, type information of the target reference signal resource, a path loss measurement reference signal resource, a power control parameter, an identifier of a terminal antenna panel, an identifier of a transmission site, a physical cell identifier PCI, and a sounding reference signal SRS resource for the uplink transmission.

With reference to the second aspect, in some implementations of the second aspect, the method further includes:
receiving third capability information, where the third capability information indicates that the terminal device supports use of the first parameter to indicate the transmit beam information for the uplink transmission and/or the receive beam information for the downlink transmission.

With reference to the second aspect, in some implementations of the second aspect, the first parameter is indicated by one or more of the following signaling:
downlink control information DCI;
a media access control MAC control element CE; and
radio resource control RRC signaling.

With reference to the second aspect, in some implementations of the second aspect, when the first parameter includes the physical cell identifier, the first parameter is indicated by the RRC signaling;
when the first parameter includes at least two target reference signal resources, the first parameter is indicated by the MAC CE signaling or the RRC signaling;
when the first parameter includes the path loss measurement reference signal resource or the power control parameter, the first parameter is indicated by the RRC signaling or the MCE CE signaling;
when the first parameter includes the identifier of the terminal antenna panel, the first parameter is indicated by the RRC signaling or the MAC CE signaling;
when the first parameter includes the identifier of the transmission site, the first parameter is indicated by the RRC signaling, the MACE signaling, or the DCI;
when the first parameter includes a new QCL type, the first parameter is indicated by the RRC signaling, a MAC CE signal, or the DCI signaling.

With reference to the second aspect, in some implementations of the second aspect, when the first parameter includes the PCI, a time-to-apply of the first parameter is a measurement gap of neighboring cell measurement/neighboring frequency measurement;
when the first parameter includes the identifier of the terminal antenna panel, a time-to-apply of the first parameter is a time required for activation of the terminal antenna panel;
when the first parameter includes the identifier of the transmission site, a time-to-apply of the first parameter is a time required for uplink timing of the transmission site; or
when the first parameter includes the path loss measurement reference signal resource, a time-to-apply of the first parameter is a time required for measurement of a path loss reference signal, where
the time-to-apply of the first parameter is a time between an indication moment of the first parameter and a moment at which the terminal device starts to perform data transmission based on the first parameter.

With reference to the second aspect, in some implementations of the second aspect, when each of a plurality of pieces of information included in the first parameter corresponds to one time-to-apply, a largest time-to-apply in a plurality of times-to-apply corresponding to the plurality of pieces of information is the time-to-apply of the first parameter; or
when each of a plurality of pieces of information included in the first parameter corresponds to one time-to-apply, each of the plurality of pieces of information is applicable by using the corresponding time-to-apply.

It should be understood that, for beneficial effects achieved in the implementations corresponding to the second aspect of this application, refer to beneficial effects achieved in the first aspect of this application and the corresponding implementations. Details are not described again.

According to a third aspect, a wireless communication apparatus is provided. The apparatus may be a terminal device, or may be a chip that may be used in the terminal device. The apparatus has a function of implementing the terminal device in the first aspect and the possible implementations. The function may be implemented by using hardware, or may be implemented by the hardware executing corresponding software. The hardware or the software includes one or more modules corresponding to the foregoing function.

In a possible design, the apparatus includes a transceiver module. Optionally, the apparatus further includes a processing module. The transceiver module may be, for example, at least one of a transceiver, a receiver, and a transmitter. Optionally, the transceiver module may include a radio frequency circuit or an antenna. The processing module may be a processor. Optionally, the apparatus further includes a storage module. The storage module may be, for example, a memory. When the storage module is included, the storage module is configured to store instructions or data. In a possible manner, the processing module is connected to the storage module. The processing module may execute the instructions stored in the storage module or instructions from another module, so that the apparatus performs the data transmission method in the first aspect and the possible implementations.

In another possible design, when the apparatus is the chip, the chip includes a transceiver module. Optionally, the apparatus further includes a processing module. The transceiver module may be, for example, an input/output interface, a pin, or a circuit on the chip. The processing module may be, for example, a processor. Optionally, the processing module enables the chip to implement the method according to any one of the first aspect and the possible implementations. Optionally, the processing module may execute instructions in a storage module or invoke information such as data in the storage module. The storage module may be a storage module inside the chip, for example, a register or a cache. The storage module may alternatively be located inside a communication device but outside the chip, for example, a read-only memory (read-only memory, ROM) or another type of static storage device that can store static information and instructions, or a random access memory (random access memory, RAM).

The processor mentioned in any of the foregoing designs may be a general-purpose central processing unit (CPU), a microprocessor, an application-specific integrated circuit (application-specific integrated circuit, ASIC), or one or more integrated circuits configured to control program execution of the first aspect and the possible implementations.

The transceiver module is configured to receive first information, where the first indication information indicates a terminal device to perform data transmission based on a first parameter, and the first parameter indicates transmit beam information for uplink transmission and/or receive beam information for downlink transmission.

The processing module is configured to perform data transmission based on the transmit beam information and/or the receive beam information that are/is indicated by the first parameter.

In some embodiments, alternatively, the transceiver module may perform data transmission based on the transmit beam information and/or the receive beam information that are/is indicated by the first parameter.

It should be understood that, for the third aspect of this application and the corresponding implementations, refer to the method in the first aspect of this application and the corresponding implementations. Details are not described again. For example, the transceiver module may perform an operation of sending or receiving a signal in the first aspect, and the processing module performs an operation other than sending or receiving the signal.

In this application, receiving data by using the receive beam information means receiving the data by using a receive beam, and sending data by using the transmit beam information means receiving the data by using a transmit beam. Therefore, some beam information indicates beams indicated by the beam information, and may be replaced with the corresponding beams.

According to a fourth aspect, a wireless communication apparatus is provided. The apparatus may be a network device, or may be a chip that may be used in the network device. The apparatus has a function of implementing the network device in any one of the second aspect and the possible implementations of the second aspect. The function may be implemented by using hardware, or may be implemented by the hardware executing corresponding software. The hardware or the software includes one or more modules corresponding to the foregoing function.

In a possible design, the apparatus includes a transceiver module. Optionally, the apparatus further includes a processing module. The transceiver module may be, for example, at least one of a transceiver, a receiver, and a transmitter. Optionally, the transceiver module may include a radio frequency circuit or an antenna. The processing module may be a processor. Optionally, the apparatus further includes a storage module. The storage module may be, for example, a memory. When the storage module is included, the storage module is configured to store instructions or data. In a possible manner, the processing module is connected to the storage module. The processing module may execute the instructions stored in the storage module or instructions from another module, so that the apparatus performs the method in any one of the second aspect and the possible implementations of the second aspect.

In another possible design, when the apparatus is the chip, the chip includes a transceiver module. Optionally, the chip further includes a processing module. The transceiver module may be, for example, an input/output interface, a pin, or a circuit on the chip. The processing module may be, for example, a processor. Optionally, the processing module enables the chip to implement the communication method in any one of the second aspect and the possible implementations of the second aspect. Optionally, the processing module may execute instructions in a storage module or invoke information such as data in the storage module. The storage module may be a storage module inside the chip, for example, a register or a cache. The storage module may alternatively be located inside a communication device but outside the chip, for example, a read-only memory (read-only memory, ROM) or another type of static storage device that can store static information and instructions, or a random access memory (random access memory, RAM).

The processor mentioned in any of the foregoing designs may be a general-purpose central processing unit (CPU), a microprocessor, an application-specific integrated circuit (application-specific integrated circuit, ASIC), or one or more integrated circuits configured to control program execution of the method in any one of the second aspect and the possible implementations of the second aspect.

The processing module is configured to determine first indication information, where the first indication information indicates a terminal device to perform data transmission based on a first parameter, and the first parameter indicates transmit beam information for uplink transmission and/or receive beam information for downlink transmission.

The transceiver module is configured to send the first indication information to the terminal device.

In some embodiments, the transceiver module may be configured to send the first indication information to the terminal device, where the first indication information indicates the terminal device to perform data transmission based on the first parameter, and the first parameter indicates the transmit beam information for the uplink transmission and/or the receive beam information for the downlink transmission.

It should be understood that, for the fourth aspect of this application and the corresponding implementations, refer to the method in the second aspect of this application and the corresponding implementations. Details are not described again. For example, the transceiver module may perform an operation of sending or receiving a signal in the first aspect, and the processing module performs an operation other than sending or receiving the signal.

According to a fifth aspect, a computer storage medium is provided. The computer storage medium stores program code. The program code indicates instructions for performing the method in any one of the first aspect, the second aspect, or the possible implementations of the first aspect or the second aspect.

According to a sixth aspect, a computer program product including instructions is provided. When the computer program product runs on a computer, the computer is enabled to perform the method in any one of the first aspect, the second aspect, or the possible implementations of the first aspect or the second aspect.

According to a seventh aspect, a processor is provided, is configured to be coupled to a memory, and is configured to perform the method in any one of the first aspect, the second aspect, or the possible implementations of the first aspect or the second aspect.

According to an eighth aspect, a chip is provided. The chip includes a processor and a communication interface. The processor is configured to invoke instructions from the communication interface and run the instructions. When executing the instructions, the processor implements the method in any one of the first aspect, the second aspect, or the possible implementations of the first aspect or the second aspect.

Optionally, the chip may further include a memory. The memory stores the foregoing instructions.

Optionally, the chip may be integrated into a terminal device or a network device.

According to a ninth aspect, a communication system is provided. The communication system includes an apparatus that has a function of implementing the methods and the possible designs in the first aspect and an apparatus that has a function of implementing the methods and the possible designs in the second aspect.

It should be understood that, for implementations corresponding to the second aspect to the ninth aspect of this application and beneficial effects obtained, refer to the first aspect of this application, the corresponding implementations, and the beneficial effects obtained. Details are not described again.

### BRIEF DESCRIPTION OF DRAWINGS

FIG. 1 is a schematic diagram of a communication system used in an embodiment of this application;
FIG. 2 is another schematic diagram of a communication system used in an embodiment of this application;
FIG. 3 is an example that is of communication between a network device and a terminal device and that is applicable to an embodiment of this application;
FIG. 4 is a schematic diagram of a format of a MAC CE in a conventional technology;
FIG. 5 is a schematic flowchart of a data transmission method according to an embodiment of this application;
FIG. 6 is a schematic diagram of a wireless communication apparatus according to an embodiment of this application;
FIG. 7 is a schematic diagram of a structure of a terminal device according to an embodiment of this application; and
FIG. 8 is a schematic diagram of a structure of a network device according to an embodiment of this application.

### DESCRIPTION OF EMBODIMENTS

The following describes technical solutions in this application with reference to accompanying drawings.

The technical solutions in embodiments of this application may be applied to various communication systems such as a global system for mobile communications (global system for mobile communications, GSM) system, a code division multiple access (code division multiple access, CDMA) system, a wideband code division multiple access (wideband code division multiple access, WCDMA) system, a general packet radio service (general packet radio service, GPRS), a long term evolution (long term evolution, LTE) system, an LTE frequency division duplex (frequency division duplex, FDD) system, an LTE time division duplex (time division duplex, TDD) system, a universal mobile telecommunication system (universal mobile telecommunication system, UMTS), a worldwide interoperability for microwave access (worldwide interoperability for microwave access, WiMAX) communication system, a 5th generation (5th generation, 5G) system, or a new radio (new radio, NR) system.

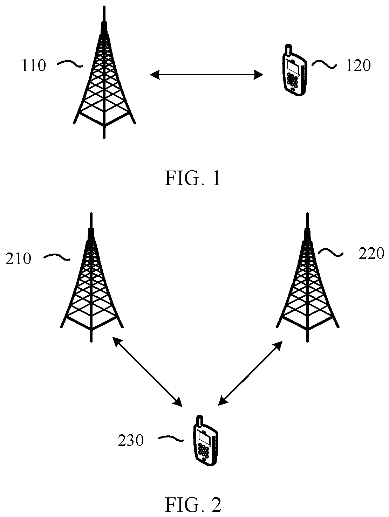

For ease of understanding embodiments of this application, a communication system used in embodiments of this application is described in detail with reference to FIG. 1 and FIG. 2.

FIG. 1 is a schematic diagram of a communication system 100 used in an embodiment of this application. As shown in the figure, the communication system 100 may include at least one network device such as a network device 110 shown in FIG. 1. The communication system 100 may further include at least one terminal device such as a terminal device 120 shown in FIG. 1. The network device 110 and the terminal device 120 may communicate with each other through a radio link.

FIG. 2 is another schematic diagram of a communication system 200 used in an embodiment of this application. As shown in the figure, the communication system 200 may include at least two network devices such as network devices 210 and 220 shown in FIG. 2. The communication system 200 may further include at least one terminal device such as a terminal device 230 shown in FIG. 2. The terminal device 230 may establish radio links with the network device 110 and the network device 120 by using a dual connectivity (dual connectivity, DC) technology or a multi-connectivity technology. The network device 110 may be, for example, a primary base station, and the network device 120 may be, for example, a secondary base station. In this case, the network device 210 is a network device used when the terminal device 230 performs initial access, and is responsible for radio resource control (radio resource control, RRC) communication with the terminal device 230. The network device 220 may be added during RRC reconfiguration, and is configured to provide an additional radio resource.

Certainly, the network device 120 may alternatively be a primary base station, and the network device 110 may alternatively be a secondary base station. This is not limited in this application. In addition, for ease of understanding only, the figure shows a case in which the two network devices are wirelessly connected to the terminal device. However, this should not constitute any limitation on a scenario to which this application is applicable. The terminal device may further establish radio links to more network devices.

A plurality of antennas may be configured for each communication device such as the network device 110 or the terminal device 120 in FIG. 1 or the network device 210, the network device 220, or the terminal device 230 in FIG. 2. The plurality of antennas may include at least one transmit antenna for sending a signal and at least one receive antenna for receiving a signal. In addition, the communication device further additionally includes a transmitter chain and a receiver chain. A person of ordinary skill in the art may understand that the transmitter chain and the receiver chain each may include a plurality of components (for example, a processor, a modulator, a multiplexer, a demodulator, a demultiplexer, or an antenna) related to signal sending and receiving. Therefore, a network device and a terminal device may communicate with each other by using a multiple-antenna technology.

It should be understood that the network device in the wireless communication system may be any apparatus that is deployed in a radio access network to provide the terminal device with a wireless communication function. The network device may include macro base stations, micro base stations (also referred to as small cells), relay stations, and access points in various forms. In systems using different radio access technologies, names of the network device may vary, for example, a base transceiver station (base transceiver station, BTS) in a global system for mobile communications (global system for mobile communication, GSM) or a code division multiple access (code division multiple access, CDMA) network, an NB (NodeB) in wideband code division multiple access (wideband code division multiple access, WCDMA), or an eNB or an eNodeB (Evolutional NodeB) in long term evolution (long term evolution, LTE). Alternatively, the network device may be a radio controller in a cloud radio access network (cloud radio access network, CRAN) scenario. Alternatively, the network device may be a base station device in a future 5G network or a network device in a future evolved PLMN network. Alternatively, the network device may be a wearable device or a vehicle-mounted device. Alternatively, the network device may be a transmission and reception point (transmission and reception Point, TRP).

In some deployment, a gNB may include a central unit (centralized unit, CU) and a DU. The gNB may further include a radio unit (radio unit, RU). The CU implements some functions of the gNB, and the DU implements some functions of the gNB. For example, the CU implements functions of a radio resource control (radio resource control, RRC) layer and a packet data convergence protocol (packet data convergence protocol, PDCP) layer. The DU implements functions of a radio link control (radio link control, RLC) layer, a media access control (media access control, MAC) layer, and a physical (physical, PHY) layer. Information at the RRC layer eventually becomes information at the PHY layer or is transformed from the information at the PHY layer. Therefore, in this architecture, it may also be considered that higher layer signaling such as RRC layer signaling is sent by the DU or is sent by the DU and the CU. It may be understood that the network device may be a CU node, a DU node, or a device including the CU node and the DU node. In addition, the CU may be classified as a network device in an access network (radio access network, RAN), or may be classified as a network device in a core network (core network, CN). This is not limited in this application.

It should be further understood that the terminal device in the wireless communication system may include various handheld devices having a wireless communication function, vehicle-mounted devices, wearable devices, computing devices, or another processing device connected to a wireless modem. The terminal may be a mobile station (mobile station, MS), a subscriber unit (subscriber unit), a cellular phone (cellular phone), a smart phone (smart phone), a wireless data card, a personal digital assistant (personal digital assistant, PDA) computer, a tablet computer, a wireless modem (modem), a handset (handset), a laptop computer (laptop computer), a machine type communication (machine type communication, MTC) terminal, or the like.

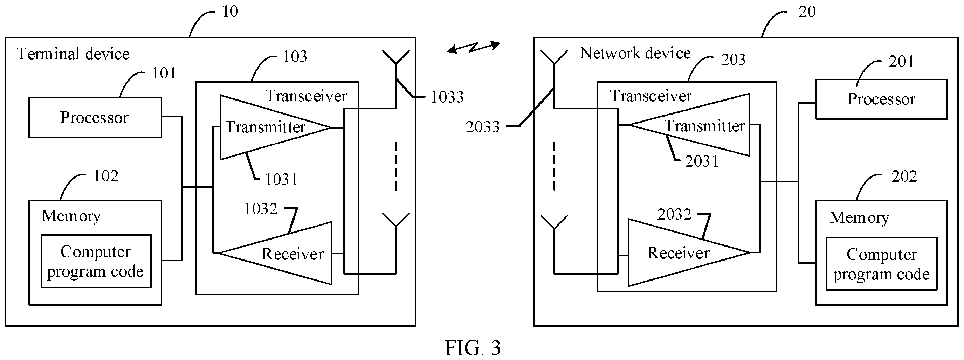

Communication between each network device and each terminal device in the communication systems shown in FIG. 1 and FIG. 2 may alternatively be represented in another form. As shown in FIG. 3, a terminal device 10 includes a processor 101, a memory 102, and a transceiver 103. The transceiver 103 includes a transmitter 1031, a receiver 1032, and an antenna 1033. A network device 20 includes a processor 201, a memory 202, and a transceiver 203. The transceiver 203 includes a transmitter 2031, a receiver 2032, and an antenna 2033. The receiver 1032 may be configured to receive transmission control information through the antenna 1033, and the transmitter 1031 may be configured to send transmission feedback information to the network device 20 through the antenna 1033. The transmitter 2031 may be configured to send the transmission control information to the terminal device 10 through the antenna 2033. The receiver 2032 may be configured to receive, through the antenna 2033, the transmission feedback information sent by the terminal device 10.

For ease of understanding embodiments of this application, the following first briefly describes several terms in this application.

### 1. Beam

The beam may be represented in an NR protocol as a spatial domain filter (spatial domain filter), a spatial filter (spatial filter), a spatial domain parameter (spatial domain parameter), a spatial parameter (spatial parameter), a spatial domain setting (spatial domain setting), a spatial setting (spatial setting), quasi-colocation (Quasi-colocation, QCL) information, a QCL assumption, a QCL indication, or the like. The beam may be indicated by a transmission configuration indication-state (TCI-state) parameter or a spatial relation (spatial relation) parameter. Therefore, in this application, the beam may be replaced with the spatial domain filter, the spatial filter, the spatial domain parameter, the spatial parameter, the spatial domain setting, the spatial setting, the QCL information, the QCL assumption, the QCL indication, the TCI-state (a DL TCI-state and a UL TCI-state), the spatial relation, or the like. The foregoing terms are also equivalent to each other. Alternatively, the beam may be replaced with another term representing the beam. This is not limited in this application.

Abeam for sending a signal may be referred to as a transmit beam (transmission beam, Tx beam), a spatial domain transmission filter (spatial domain transmission filter), a spatial transmission filter (spatial transmission filter), a spatial domain transmission parameter (spatial domain transmission parameter), a spatial transmission parameter (spatial transmission parameter), a spatial domain transmission setting (spatial domain transmission setting), or spatial transmission setting (spatial transmission setting). A downlink transmit beam may be indicated by the TCI-state.

Abeam for receiving a signal may be referred to as a receive beam (reception beam, Rx beam), a spatial domain reception filter (spatial domain reception filter), a spatial reception filter (spatial reception filter), a spatial domain reception parameter (spatial domain reception parameter), a spatial reception parameter (spatial reception parameter), a spatial domain reception setting (spatial domain reception setting), or spatial reception setting (spatial reception setting). An uplink transmit beam may be indicated by the spatial relation spatial relation, an uplink TCI-state, or a sounding reference signal (sounding reference signal, SRS) resource (indicating a transmit beam using an SRS). Therefore, the uplink beam may also be replaced with the SRS resource.

A transmit beam may refer to distribution of signal strength formed in different directions in space after a signal is transmitted through an antenna, and a receive beam may refer to distribution of signal strength that is of a radio signal received from an antenna and that is in different directions in space.

In addition, the beam may be a wide beam, a narrow beam, or a beam of another type. A technology for forming the beam may be a beamforming technology or another technology. The beamforming technology may be specifically a digital beamforming technology, an analog beamforming technology, a hybrid digital/analog beamforming technology, or the like

The beam usually corresponds to a resource. For example, during beam measurement, a network device measures different beams by using different resources, a terminal device feeds back measured resource quality, and the network device knows quality of the corresponding beams. During data transmission, beam information is also indicated by a resource corresponding to the beam information. For example, the network device indicates information about a physical downlink shared channel (physical downlink shared channel, PDSCH) beam of the terminal device by a TCI field in DCI.

Optionally, a plurality of beams that have same or similar communication features may be considered as one beam. One beam may include one or more antenna ports, and is for transmitting a data channel, a control channel, a sounding signal, and the like. The one or more antenna ports forming the beam may also be considered as one antenna port set.

### 2. TCI-state (indicating a downlink beam)

A network device may generate different beams that point to different transmission directions. In downlink data transmission, when sending data to a terminal device by using a specified beam, the network device needs to notify the terminal device of information about the transmit beam used by the network device. In this way, the terminal device can receive, by using a receive beam corresponding to the transmit beam, the data sent by the network device. In the 3GPP R15/R16 protocol, the network device indicates, to the terminal device by using a TCI field in downlink control information (downlink control information, DCI), related information of the transmit beam used by the network device. Specifically, a size of the TCI field is three bits, and may specifically represent eight different field values (codepoint). Each value of the TCI field corresponds to a TCI-state index, and the TCI-state index may uniquely identify a TCI-state. The TCI-state includes several parameters, and the related information of the transmit beam may be determined by using these parameters.

The TCI-state is configured by the network device for each terminal device. Each TCI-state includes an index of the TCI-state, namely, tci-StateId, and two pieces of QCL-Info. Each piece of QCL-Info includes a cell field and a bwp-Id that respectively indicate the TCI-state is applied to which bandwidth part (bandwidth part, BWP) of which cell (cell). That is, different QCL-Info may be configured for different BWPs of different cells or a same cell. The QCL-Info further includes a reference signal (referenceSignal) for indicating forming a QCL relationship with which reference signal resource.

In the R15/R16 protocol, the term "beam" is usually not directly used, and the beam is usually replaced with another term. For example, in both data transmission and channel measurement, the beam corresponds to a reference signal resource, and one beam corresponds to one reference signal resource. Therefore, forming a QCL relationship with which reference signal resource herein is essentially forming a QCL relationship with which beam. The QCL relationship means that two reference signal resources (or two antenna ports, where antenna ports and reference signal resources are also in a one-to-one correspondence) have some same spatial parameters. Specifically, which spatial parameters are the same depends on a type of the QCL-Info, that is, another field qcl-type of the QCL-Info. There may be four values of the qcl-type: {typeA, typeB, typeC, typeD}. TypeD is used as an example. TypeD indicates that the two reference signal resources have same spatial receive parameter information. That is, two beams have a same receive beam. A maximum of one of the two pieces of QCL-Info included in the TCI-state can be typeD.

The following uses an example to describe in detail how the network device indicates receive beam information of a data transmission beam to the terminal device by using the TCI-state based on the R15/R16 protocol. This includes TCI-state configuration, activation, and indication.

TCI-state configuration: The network device configures a plurality of TCI-states for the terminal device by using resource control (radio resource control, RRC) signaling. Each of these TCI-states includes a piece of QCL-Info of typeD. Alternatively, the network device may configure a TCI-state that does not include QCL-info of typeD. However, the TCI-states do not indicate the data transmission beam. Therefore, details are not further described herein.

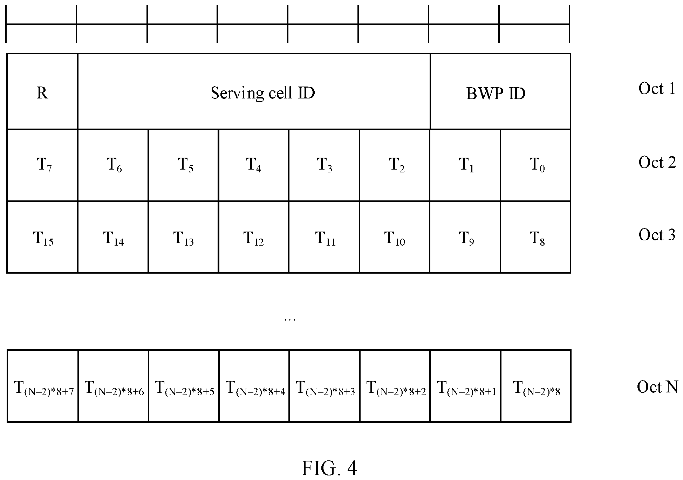

TCI-state activation: After configuring the plurality of TCI-states, the network device further needs to activate eight of the TCI-states by using a MAC-CE. The eight TCI states are in a one-to-one correspondence with eight values of the TCI field in the DCI. That is, the eight TCI-states corresponding to the eight values of the TCI field in the DCI are determined by using the MAC CE signaling. A structure of the MAC CE for activating a TCI is shown in FIG. 4. Fields T0 to T(N-2)x8+7 respectively correspond to TCI-states whose indexes are 0 to (N-2)x8+7 and that are configured in the first step, a size of each field is 1 bit, and a value may be 0 or 1. The value 1 indicates that the TCI-state is activated, and the value 0 indicates that the TCI-state is not activated. Theoretically, each MAC CE may have eight activation fields whose values are 1, and the others are all 0. TCI-states corresponding to the eight fields whose values are 1 are the eight TCI-states corresponding to the eight values of the TCI field in the DCI. For example, a smallest value 000 of the TCI field corresponds to an activated TCI-state with a smallest index in the MAC CE. The rest may be deduced by analogy. There are many types of MAC-CEs. In addition to the MAC-CE for activating a TCI-state, there are many MAC-CEs for other purposes.

TCI-state indication: The network device indicates a specific TCI-state by using the TCI field in the DCI. For example, a value of the TCI field in the DCI sent by the network device to the terminal device is 000, indicating that a TCI-state corresponding to 000 is for the data transmission beam. A reference signal included in QCL-Info whose type is typeD in the TCI-state is a channel state information reference signal (channel atate information - reference signal, CSI-RS) whose index is #1, indicating that a beam for data transmission is the same as a receive beam corresponding to the CSI-RS whose index is #1. The receive beam corresponding to the CSI-RS whose index is #1 may be determined through a beam measurement procedure, and is known to the terminal device. Therefore, the terminal device may determine, based on a specific value of the TCI field, a receive beam corresponding to the data transmission beam, to receive data by using a corresponding receive beam.

### 3. Spatial relation (indicating an uplink beam)

In a current protocol, a transmit beam for uplink transmission is indicated by the spatial relation, and a function of the spatial relation is similar to that of a TCI-state, and notifies a terminal device of the transmit beam for the uplink transmission.

The spatial relation also needs to be configured through RRC signaling first. A configuration structure of the spatial relation includes a spatial relation ID, a cell ID, a target reference signal resource, a path loss measurement reference signal, a power control parameter, and the like. The target reference signal resource (which may be one of an SRS/an SSB/a CSI-RS) indicates the corresponding uplink beam. If a spatial relation #1 is for the uplink transmission, and the spatial relation #1 includes the target reference signal resource, it indicates that the transmit beam for the uplink transmission is a transmit/receive beam of a target reference signal. For example, when the target reference signal resource is an uplink resource SRS, it indicates that the transmit beam for the uplink transmission is a transmit beam of the SRS (where the transmit beam of the SRS is known). For another example, when the target reference signal resource is a downlink resource such as a synchronization signal and physical broadcast channel block (synchronization signal and PBCH Block, SSB) or a channel state information reference signal (channel status information reference signal, CSI-RS), it indicates that the transmit beam for the uplink transmission is a receive beam of the SSB/CSI-RS (where the receive beam of the SSB/CSI-RS is known).

A network device may configure a plurality of spatial relations for the terminal device. Then, one of the spatial relations is activated for corresponding data transmission by using a MAC CE. The uplink transmission includes a PUCCH, an SRS, a PUSCH, and the like, and a corresponding spatial relation is required. A spatial relation of the PUCCH is indicated by MAC-CE signaling. A spatial relation of the SRS is also indicated by MAC-CE signaling. During PUSCH transmission, a specific SRS is associated, and a spatial relation of the SRS is for transmission.

### 4. Antenna panel (panel)

The panel may be an antenna panel of a network device, or may be an antenna panel of a terminal device. There are usually one or more antennas on one antenna panel. These antennas are arranged into an antenna array, and beamforming is performed, to form an analog beam. The antenna array may generate analog beams pointing to different directions. That is, a plurality of analog beams may be formed on each antenna panel, and a best analog beam used by the antenna panel may be determined through beam measurement. The terminal device may be equipped with a plurality of antenna panels. The antenna panels may be distributed at different locations, and face different directions. This can ensure that at least one antenna panel faces the network device regardless of a direction that the terminal device faces, and the terminal device can perform data transmission with the network device. The terminal device may simultaneously enable all antenna panels for transmission. Alternatively, to reduce power consumption of the terminal device, the terminal device may perform transmission by using only one antenna panel once, and another unused antenna panel may be closed. Whether the antenna panel of the terminal device is in an open state or a closed state usually needs to be notified to the network device. In other words, the terminal device and the network device usually need to exchange status information of the antenna panels.

In embodiments of this application, unless otherwise specified, each antenna panel is the antenna panel of the terminal device. In the protocol, the antenna panel may be represented by a panel, a panel index, or the like. In addition, the antenna panel may also be implicitly represented in another manner. For example, the antenna panel may also be represented by using an antenna port (for example, a CSI-RS port, an SRS port, a demodulation reference signal (demodulation reference signal, DMRS) port, a phase tracking reference signal (phase tracking reference signal, PTRS) port, a cell-specific reference signal (cell reference signal, CRS) port, a time-frequency tracking reference signal (tracking reference signal, TRS) port, or an SSB port) or an antenna port group, may be represented by using a resource (for example, a CSI-RS resource, an SRS resource, a DMRS resource, a PTRS resource, a CRS resource, a TRS resource, or an SSB resource) or a resource group, may be represented by using a channel (for example, a physical uplink control channel (physical uplink control channel, PUCCH), a physical uplink shared channel (physical uplink sharing channel, PUSCH), a physical random access channel (physical random access channel, PRACH), a PDSCH, a physical downlink control channel (physical downlink control channel, PDCCH), or a physical broadcast channel (physical broadcast channel, PBCH)), or may be represented by using a beam, QCL, a TCI-state, a spatial relation, or an index configured in the QCL, the TCI-state, or the spatial relation. Alternatively, the antenna panel may be represented by using a beam group, a QCL group, a TCI-state group, a spatial relation group, or the like. In other words, an identifier of the antenna panel/panel in this application may be replaced with an identifier of the foregoing content.

Currently, a network device indicates beams for uplink and downlink transmission completely independently. A spatial relation is for indication in an uplink, and a TCI-state is for indication in a downlink. The network device needs to configure the spatial relation and the TCI-state by using independent signaling, and needs independent media access control (media access control, MAC) control element (control element, CE) signaling to activate the spatial relation and the TCI-state. Independent procedures are for uplink and downlink beam indication. The procedures are complex, and signaling overheads are high.

In view of this, embodiments of this application provide a data transmission method. Transmit beam information for uplink transmission and receive beam information for downlink transmission are indicated together, so that an uplink and downlink beam indication procedure can be simplified, and signaling overheads can be reduced.

The following describes embodiments of this application in detail with reference to the accompanying drawings.

It may be understood that, in embodiments shown below, "first", "second", "third", and various numerical numbers are merely for distinguishing for ease of description, and are not for limiting the scope of embodiments of this application. For example, different target reference signal resource QCL types, different indication information, and the like are distinguished.

It should be further understood that, in embodiments shown below, "pre-obtaining" may include being indicated by network device signaling or being predefined, for example, being defined in a protocol. "Being predefined" may be implemented by prestoring corresponding code or a corresponding table in a device (for example, including a terminal device and a network device) or in another manner that may indicate related information. A specific implementation of "being predefined" is not limited in this application.

It should be further understood that "storing" in embodiments of this application may be storage in one or more memories. The one or more memories may be separately disposed, or may be integrated into an encoder or a decoder, a processor, or a communication apparatus. Alternatively, a part of the one or more memories may be separately disposed, and a part of the one or more memories are integrated into a decoder, a processor, or a communication apparatus. A type of the memory may be a storage medium in any form. This is not limited in this application.

It should be further understood that the "protocol" in embodiments of this application may be a standard protocol in the communications field, and for example, may include an LTE protocol, an NR protocol, and a related protocol applied to a future communication system. This is not limited in this application.

The technical solutions in this application may be used in a wireless communication system, for example, the communication system 100 shown in FIG. 1 or the communication system 200 shown in FIG. 2. There may be a wireless communication connection relationship between two communication apparatuses located in the wireless communication system. One of the two communication apparatuses may correspond to, for example, the network device 110 shown in FIG. 1, for example, may be the network device 110 or a chip configured in the network device 110. The other of the two communication apparatuses may correspond to, for example, the terminal device 120 in FIG. 1, for example, may be the terminal device 120 or a chip configured in the terminal device 120. One of the two communication apparatuses may correspond to, for another example, the network device 210 shown in FIG. 2, for example, may be the network device 210 or a chip configured in the network device 210. The other of the two communication apparatuses may correspond to, for another example, the terminal device 230 shown in FIG. 2, for example, may be the terminal device 230 or a chip configured in the terminal device 230. One of the two communication apparatuses may correspond to, for still another example, the network device 220 shown in FIG. 2, for example, may be the network device 220 or a chip configured in the network device 220. The other of the two communication apparatuses may correspond to, for still another example, the terminal device 230 shown in FIG. 2, for example, may be the terminal device 230 or a chip configured in the terminal device 230.

Without loss of generality, the following first describes embodiments of this application in detail by using a data transmission process between one terminal device and one network device as an example. It may be understood that any terminal device in the wireless communication system or a chip configured in the terminal device may perform data transmission based on a same method, and any network device in the wireless communication system or a chip configured in the network device may perform data transmission based on a same method. This is not limited in this application.

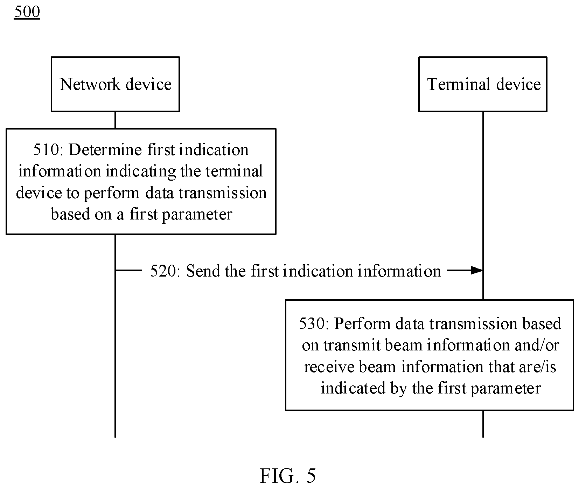

FIG. 5 is a schematic flowchart of a data transmission method 500 from a perspective of device interaction. As shown in FIG. 5, the method 500 may include step 501 to step 503. The following describes in detail the steps in the method 500 with reference to FIG. 5.

510: A network device determines first indication information, where the first indication information indicates a terminal device to perform data transmission based on a first parameter, and the first parameter indicates transmit beam information for uplink transmission and/or receive beam information for downlink transmission. Herein, data transmission includes data sending and/or data receiving.

For example, the uplink transmission includes but is not limited to any one or more of a PUCCH, a PUSCH, a PRACH, and an SRS, and the downlink transmission includes but is not limited to any one or more of a PDCCH, a PDSCH, an SSB, a CSI-RS, a TRS, and a PTRS.

In other words, in this embodiment of this application, the first indication information may indicate the transmit beam information for the uplink transmission and the receive beam information for the downlink transmission together. Specifically, the first indication information may indicate a specific first parameter based on which the terminal device performs data transmission. The first parameter indicated by the first indication information can indicate the transmit beam information for the uplink transmission and the receive beam information for the downlink transmission together.

In this embodiment of this application, the first parameter may have one or more of three functions. Specific descriptions are as follows:
Function 1: The first parameter indicates both the transmit beam information for the uplink transmission and the receive beam information for the downlink transmission.

In a first implementation, the first parameter may include a single target reference signal resource, and the single target reference signal resource may indicate both the transmit beam information for the uplink transmission and the receive beam information for the downlink transmission.

In other words, the single target reference signal resource in the first parameter may be for determining both a transmit beam for the uplink transmission and a receive beam for the downlink transmission of the terminal device.

In an example, the single target reference signal resource in the first parameter may be an uplink reference signal resource, indicating (that is, the uplink reference signal resource indicates) that the terminal device uses a transmit beam of the uplink reference signal resource as the receive beam for the downlink transmission and the transmit beam for the uplink transmission. For example, the uplink reference signal resource may be an SRS resource.

In another example, the single target reference signal resource in the first parameter may be a downlink reference signal resource, indicating (that is, the downlink reference signal resource indicates) that the terminal device uses a receive beam of the downlink reference signal resource as the receive beam for the downlink transmission and the transmit beam for the uplink transmission. For example, the downlink reference signal resource may be an SSB/CSI-RS/DMRS/TRS/PTRS resource.

The following shows an example of a format of the first parameter:

### Example #1:

```
 first parameter {
               target reference signal resource
 }
```

In the first implementation, it may be considered that a resource type of the target reference signal resource is indicating both the transmit beam information for the uplink transmission and the receive beam information for the downlink transmission. In some embodiments, the type of the target reference signal resource may also be described/replaced with a type of the first parameter.

Optionally, in Example #1, the first parameter may further include a type field corresponding to the target reference signal resource, to indicate that the type of the target reference signal resource is indicating both the transmit beam information for the uplink transmission and the receive beam information for the downlink transmission. In other words, in this case, the type field may explicitly indicate the type of the target reference signal resource.

In some other embodiments, the first parameter may not indicate the type of the target reference signal resource. In this case, it may be considered by default that the type of the target reference signal resource is indicating both the transmit beam information for the uplink transmission and the receive beam information for the downlink transmission. In other words, the first parameter is always for determining both the transmit beam information for the uplink transmission and the receive beam information for the downlink transmission.

Optionally, in Example #1, the first parameter may further include a QCL type corresponding to the target reference signal resource, and the QCL type indicates that the target reference signal resource indicates the transmit beam information for the uplink transmission and the receive beam information for the downlink transmission (for example, the QCL type may be referred to as a third QCL type). In other words, the QCL type may indicate the type of the target reference signal resource.

For example, the third QCL type may be an existing QCL type (for example, typeD), or may be an introduced new QCL type (for example, typeE or type F). This is not limited. In other words, a QCL type (for example, typeD, typeE, or typeF) may indicate that a target reference signal is for determining both the transmit beam information for the uplink transmission and the receive beam information for the downlink transmission.

In a second implementation, the first parameter may include a plurality of (for example, two) target reference signal resources, for example, a first target reference signal resource and a second target reference signal resource. The two target reference signal resources may respectively indicate the transmit beam information for the uplink transmission and the receive beam information for the downlink transmission. For example, the first target reference signal resource may indicate the transmit beam information for the uplink transmission, and the second target reference signal resource may indicate the receive beam information for the downlink transmission, or vice versa. This is not limited.

The first target reference signal resource may be an uplink reference signal resource or a downlink reference signal resource. This is not limited in this application.

When the first target reference signal resource indicates the transmit beam information for the uplink transmission and is the uplink reference signal resource, it indicates (that is, the uplink reference signal resource indicates) that the terminal device uses a transmit beam of the uplink reference signal resource as a transmit beam for the uplink transmission.

When the first target reference signal resource indicates the transmit beam information for the uplink transmission and is the downlink reference signal resource, it indicates (that is, the downlink reference signal resource indicates) that the terminal device uses a receive beam of the downlink reference signal resource as a transmit beam for the uplink transmission.

When the first target reference signal resource indicates the receive beam information for the downlink transmission and is the uplink reference signal resource, it indicates (that is, the uplink reference signal resource indicates) that the terminal device uses a transmit beam of the uplink reference signal resource as a receive beam for the downlink transmission.

When the first target reference signal resource indicates the transmit beam information for the downlink transmission and is the downlink reference signal resource, it indicates (that is, the downlink reference signal resource indicates) that the terminal device uses a receive beam of the downlink reference signal resource as a receive beam for the downlink transmission.

The second target reference signal resource may be an uplink reference signal resource or a downlink reference signal resource. This is not limited in this application.

When the second target reference signal resource indicates the transmit beam information for the downlink transmission and is the uplink reference signal resource, it indicates (that is, the uplink reference signal resource indicates) that the terminal device uses a transmit beam of the uplink reference signal resource as a receive beam for the downlink transmission.

When the second target reference signal resource indicates the transmit beam information for the downlink transmission and is the downlink reference signal resource, it indicates (that is, the downlink reference signal resource indicates) that the terminal device uses a receive beam of the downlink reference signal resource as a receive beam for the downlink transmission.

When the second target reference signal resource indicates the transmit beam information for the uplink transmission and is the uplink reference signal resource, it indicates (that is, the uplink reference signal resource indicates) that the terminal device uses a transmit beam of the uplink reference signal resource as a transmit beam for the uplink transmission.

When the second target reference signal resource indicates the transmit beam information for the uplink transmission and is the downlink reference signal resource, it indicates (that is, the downlink reference signal resource indicates) that the terminal device uses a receive beam of the downlink reference signal resource as a transmit beam for the uplink transmission.

In the second implementation, a target reference signal resource indicating the transmit beam information for the uplink transmission and a target reference signal resource indicating the receive beam information for the downlink transmission may be determined in the following two manners.

Manner 1: Perform determining based on an indication order of a plurality of target reference signal resources in the first parameter.

Herein, the indication order may be a sorting order (for example, an order or a reverse order) of the plurality of target reference signal resources in the first parameter. The following shows an example of a format of the first parameter.

### Example #2:

```
first parameter {
               target reference signal resource #1
               target reference signal resource #2
```

}A sorting order of the target reference signal resources in the first parameter is the target reference signal resource #1 and the target reference signal resource #2.

For example, the first parameter includes the target reference signal resource #1 and the target reference signal resource #2. Based on the sorting order of the target reference signal resource #1 and the target reference signal resource #2, the 1^{st} target reference signal resource (namely, the target reference signal resource #1) may indicate the transmit beam information for the uplink transmission, and the 2^{nd} target reference signal resource (namely, the target reference signal resource #2) may indicate the receive beam information for the downlink transmission. Alternatively, based on a sorting reverse order of the target reference signal resource #1 and the target reference signal resource #2, the 2^{nd} target reference signal resource (namely, the target reference signal resource #1) may indicate the transmit beam information for the uplink transmission, and the 1^{st} target reference signal resource (namely, the target reference signal resource #2) may indicate the receive beam information for the downlink transmission.

For example, the network device may indicate, to the terminal device in advance by using signaling, a manner of determining the transmit beam information and the receive beam information based on the indication order of the target reference signal resources in the first parameter, or a manner of determining the transmit beam information and the receive beam information based on the indication order of the target reference signal resources in the first parameter is predefined in a protocol. This is not limited in this embodiment of this application.

Manner 2: Performing determining based on a resource type of the target reference signal resource.

In the second implementation, the resource type of the target reference signal resource may include indicating the transmit beam information for the uplink transmission and indicating the receive beam information for the downlink transmission. When the resource type of the target reference signal resource is indicating the transmit beam information for the uplink transmission, the target reference signal resource may be for determining the transmit beam for the uplink transmission (that is, for determining the transmit beam for the uplink transmission). When the resource type of the target reference signal resource is indicating the receive beam information for the downlink transmission, the target reference signal resource may be for determining the receive beam for the downlink transmission (that is, for determining the receive beam for the downlink transmission).

The following shows several examples of a format of the first parameter.

### Example #3:

```
first parameter {
               reference signal resource 
```

```
{target reference signal resource #3} indicating the transmit beam
```

```
 information for the uplink transmission
               reference signal resource {target reference signal resource #4}
```

```
 indicating the transmit beam
 information for the downlink transmission
}
```

}In Example #3, a type of the 1^{st} target reference signal resource (namely, the target reference signal resource #3) indicated in the first parameter indicates the transmit beam information for the uplink transmission, and a type of the 2^{nd} target reference signal resource (namely, the target reference signal resource #4) indicates the receive beam information for the downlink transmission. Alternatively, in another embodiment, a case may be opposite. This is not limited in this application.

### Example #4:

```
first parameter {
               target reference signal resource #5 {
                   resource identifier (ID)
                   resource type #1
               }
               target reference signal resource #6 {
                   resource ID
                   resource type #2
               }
}
```

The resource type #1 may be indicating the transmit beam information for the uplink transmission, and the resource type #2 may be indicating the receive beam information for the downlink transmission. Alternatively, the resource type #1 may be indicating the receive beam information for the downlink transmission, and the resource type #2 may be indicating the transmit beam information for the uplink transmission.

In other words, in Example #4, the first parameter may further include a type field (for example, the field indicating the resource type #1 or the field indicating the resource type #2) corresponding to the target reference signal resource, to indicate the type of the target reference signal resource. In some embodiments, the type of the target reference signal resource may also be described/replaced with a type of the first parameter.

### Example #5:

```
first parameter {
               target reference signal resource #7 {
                   resource identifier (ID)
                   first QCL type
               }
               target reference signal resource #8 {
                   resource ID
                    second QCL type
               }
}
```

The first QCL type indicates that the target reference signal resource (for example, the target reference signal resource #7) indicates the transmit beam information for the uplink transmission. That is, the target reference signal resource is for determining the transmit beam for the uplink transmission. The second QCL type indicates that the target reference signal resource (for example, the target reference signal resource #8) indicates the receive beam information for the downlink transmission. That is, the target reference signal resource is for determining the receive beam for the downlink transmission. Alternatively, vice versa. This is not limited in this application.

In other words, a QCL type of the target reference signal resource may correspond to the resource type of the target reference signal resource, that is, indicates the resource type of the target reference signal resource. In other words, the QCL type is for representing the type of the target reference signal resource.

For example, the first QCL type or the second QCL type may be an existing QCL type (for example, typeD), or may be an introduced new QCL type (for example, typeE). This is not limited.

For example, a function of typeD may be redefined, so that typeD can indicate that the target reference signal resource is for determining the transmit beam information for the uplink transmission, or can indicate that the target reference signal resource is for determining the receive beam information for the downlink transmission. In this case, it may be further distinguished, with reference to another condition, whether typeD indicates that the target reference signal resource is for determining the transmit beam information for the uplink transmission or the receive beam information for the downlink transmission. For details, refer to the following detailed descriptions.

For another example, a new QCL type (for example, typeE) may indicate that a target reference signal is for determining the transmit beam information for the uplink transmission. In this case, in an example, the first QCL type may be typeD, and the second QCL type may be typeE, or vice versa. This is not limited in this application.

### Example #6:

```
first parameter {
               QCL information {
                   first QCL type
                   resource identifier (ID)
               }
               QCL information {
                    second QCL type
                   resource identifier (ID)
               }
}
```

In Example 6, the first parameter may include two types of QCL information. Each type of QCL information corresponds to one QCL type and a resource ID of one target reference signal resource. In other words, each type of QCL information indicates the QCL type of the target reference signal resource corresponding to the resource ID included in the QCL information. For the first QCL type and the second QCL type, refer to the foregoing descriptions. Details are not described again.

In some other embodiments, the first parameter may include three or more target reference signal resources. This is not limited in this application. A quantity of the target reference signal resources included in the first parameter may be specified in a protocol, indicated by the network device, or reported by the terminal device. This is not limited in this embodiment of this application.

When a function of the first parameter is Function 1, it may be considered that in this case, a type of the first parameter indicates both the transmit beam information for the uplink transmission and the receive beam information for the downlink transmission.

Optionally, the first parameter may further include a parameter (or a sub-parameter), indicating that a type of the first parameter is indicating both the transmit beam information for the uplink transmission and the receive beam information for the downlink transmission. In other words, in this case, the first sub-parameter may explicitly indicate the type of the first parameter.

In some other embodiments, the first parameter may not indicate a type of the first parameter. In this case, the type of the first parameter may be considered by default as indicating both the transmit beam information for the uplink transmission and the receive beam information for the downlink transmission.

Function 2: The first parameter indicates the transmit beam information for the uplink transmission or the receive beam information for the downlink transmission.

In a possible implementation, the first parameter may include a single target reference signal resource, to indicate an uplink transmit beam or a downlink receive beam. For example, at the same time, the single target reference signal resource may indicate only the transmit beam information for the uplink transmission, or may indicate only the receive beam information for the downlink transmission.

In other words, the single target reference signal resource in the first parameter may be for determining only a transmit beam for the uplink transmission of the terminal device or only a receive beam for the downlink transmission of the terminal device at the same time.

In an example, the single target reference signal resource in the first parameter may be an uplink reference signal resource, indicating (that is, the uplink reference signal resource indicates) that the terminal device uses a transmit beam of the uplink reference signal resource as the transmit beam for the uplink transmission, or uses a transmit beam of the uplink reference signal resource as the receive beam for the downlink transmission. For example, the uplink reference signal resource may be an SRS resource.

In another example, the single target reference signal resource in the first parameter may be a downlink reference signal resource, indicating (that is, the downlink reference signal resource indicates) that the terminal device uses a receive beam of the downlink reference signal resource as the transmit beam for the uplink transmission, or uses a receive beam of the downlink reference signal resource as the receive beam for the downlink transmission. For example, the downlink reference signal resource may be an SSB/CSI-RS/DMRS/TRS/PTRS resource.

When the first parameter includes the single target reference signal resource, whether a target reference signal resource indicates the transmit beam information for the uplink transmission or indicates the receive beam information for the downlink transmission may be determined in the following two manners.

Manner 1: Performing determining based on a resource type of the target reference signal resource.

The resource type of the target reference signal resource may include indicating the transmit beam information for the uplink transmission and indicating the receive beam information for the downlink transmission. Specifically, for the two resource types of the target reference signal resource, refer to the foregoing descriptions. Details are not described herein again.

For example, in this case, a format of the single target reference signal resource in the first parameter may be a format of one of the target reference signal resources in Example 3 to Example 6. Details are not described herein again.

Manner 2: Performing determining based on a type of the first parameter.

When a function of the first parameter is Function 2, the type of the first parameter may include indicating the transmit beam information for the uplink transmission and indicating the receive beam information for the downlink transmission. When the type of the first parameter is indicating the transmit beam information for the uplink transmission, the first parameter (that is, the single target reference signal resource in the first parameter) may be for determining the transmit beam for the uplink transmission (that is, for determining the transmit beam for the uplink transmission). When the type of the first parameter is indicating the receive beam information for the downlink transmission, the first parameter (that is, the single target reference signal resource in the first parameter) may be for determining the receive beam for the downlink transmission (that is, for determining the receive beam for the downlink transmission).

The following shows an example of a format of the first parameter.

### Example 7:

```
first parameter {
               type of the first parameter 
```

```
{select either of the two: indicating the transmit beam information for
```

```
               the uplink transmission and indicating the receive beam information 
```

```
for the downlink transmission}
}
```

}In Example 7, the type of the first parameter may be indicating the transmit beam information for the uplink transmission or indicating the receive beam information for the downlink transmission.

In some other embodiments, the first parameter may include two or more target reference signal resources. This is not limited in this application. A quantity of the target reference signal resources included in the first parameter may be specified in a protocol, indicated by the network device, or reported by the terminal device. This is not limited in this embodiment of this application.

Manner 3: Whether the first parameter or the target reference signal resource specifically indicates the transmit beam information for the uplink transmission or the receive beam information for the downlink transmission depends on whether the first parameter corresponds to the uplink transmission or the downlink transmission. If the first parameter corresponds to the uplink transmission, that is, the first parameter is carried in signaling related to the uplink transmission (for example, the first parameter is indicated by DCI/a MAC CE for scheduling the uplink transmission), the first parameter is for determining the transmit beam information for the uplink transmission. If the first parameter corresponds to the downlink transmission, that is, the first parameter is carried in signaling related to the downlink transmission (for example, the first parameter is indicated by DCI/a MAC CE for scheduling downlink transmission), the first parameter is for determining the receive beam information for the downlink transmission. For example, the uplink transmission may be a PUSCH, a PUCCH, an SRS, a random access message 1 or 3, or the like, and the downlink transmission may be a PDSCH, a PDCCH, a CSI-RS, a TRS, a random access message 2 or 4, or the like. This is not limited in this application.

Function 3: The first parameter indicates the transmit beam information for the uplink transmission or the receive beam information for the downlink transmission, or indicates both the transmit beam information for the uplink transmission and the receive beam information for the downlink transmission.

In a possible implementation, the first parameter may include the single target reference signal resource, and the single target reference signal resource may indicate only the transmit beam information for the uplink transmission, indicate only the receive beam information for the downlink transmission, or indicate both the transmit beam information for the uplink transmission and the receive beam information for the downlink transmission.

In other words, the single target reference signal resource in the first parameter may be for determining only a transmit beam for the uplink transmission of the terminal device or determining only a receive beam for the downlink transmission of the terminal device, or may be for determining both a transmit beam for the uplink transmission and a receive beam for the downlink transmission of the terminal device.

In an example, the single target reference signal resource in the first parameter may be an uplink reference signal resource, indicating (that is, the uplink reference signal resource indicates) that the terminal device uses a transmit beam of the uplink reference signal resource as the transmit beam for the uplink transmission, or uses a transmit beam of the uplink reference signal resource as the receive beam for the downlink transmission. Alternatively, a transmit beam of the uplink reference signal resource is used as both the transmit beam for the uplink transmission and the receive beam for the downlink transmission. For example, the uplink reference signal resource may be an SRS resource.

In another example, the single target reference signal resource in the first parameter may be a downlink reference signal resource, indicating (that is, the downlink reference signal resource indicates) that the terminal device uses a receive beam of the downlink reference signal resource as the transmit beam for the uplink transmission, uses a receive beam of the downlink reference signal resource as the receive beam for the downlink transmission, or uses a receive beam of the downlink reference signal resource as both the transmit beam for the uplink transmission and the receive beam for the downlink transmission. For example, the downlink reference signal resource may be an SSB/CSI-RS/DMRS/TRS/PTRS resource.

When the first parameter includes the single target reference signal resource, whether the target reference signal resource indicates the transmit beam information for the uplink transmission, indicates the receive beam information for the downlink transmission, or indicates both the transmit beam information for the uplink transmission and the receive beam information for the downlink transmission may be determined in the following two manners.

Manner 1: Performing determining based on a resource type of the target reference signal resource.

The resource type of the target reference signal resource may include indicating the transmit beam information for the uplink transmission, indicating the receive beam information for the downlink transmission, and indicating both the transmit beam information for the uplink transmission and the receive beam information for the downlink transmission. Specifically, for the three resource types of the target reference signal resource, refer to the foregoing descriptions. Details are not described herein again.

The following shows several examples of a format of the first parameter.

### Example 8:

```
first parameter {
               target reference signal resource #9 {
                   resource ID
               resource type #3 {select one of the three: 
```

```
indicating the transmit beam information for the uplink
```

```
              transmission, indicating 
```

```
the receive beam information for the downlink transmission, and
```

```
              indicating both the transmit beam information 
```

```
for the uplink transmission and the receive beam
```

```
              information for the downlink transmission}
              }
}
```

The resource type #3 may be indicating the transmit beam information for the uplink transmission, indicating the receive beam information for the downlink transmission, or indicating both the transmit beam information for the uplink transmission and the receive beam information for the downlink transmission.

In other words, in Example #8, the first parameter may further include a type field (for example, the field indicating the resource type #3) corresponding to the target reference signal resource, to indicate the type of the target reference signal resource.

### Example 9:

```
first parameter {
               target reference signal resource #7 {
                   resource identifier (ID)
```

```
                  QCL type 
```

```
{select one of the three: a first QCL type, a second QCL type, and a third QCL
```

```
                  type}
               }
}
```

### Example 10:

```
 first paramleter {
     QCL information {
         QCL type {select one of the three: a first QCL type, a second QCL type, and a third QCL
         type}
         resource identifier (ID)
     }
 }
```

The QCL type may be the first QCL type, the second QCL type, or the third QCL type.

Herein, the foregoing three QCL types may correspond to three resource types of the target reference signal resource, that is, may indicate the resource types of the target reference signal resource.

Specifically, for the first QCL type, the second QCL type, or the third QCL type, refer to the foregoing descriptions. Details are not described herein again.

Manner 2: Performing determining based on a type of the first parameter.

When a function of the first parameter is Function 3, the type of the first parameter may include: indicating the transmit beam information for the uplink transmission, indicating the receive beam information for the downlink transmission, and indicating both the transmit beam information for the uplink transmission and the receive beam information for the downlink transmission.

For the types of the first parameter, namely, indicating the transmit beam information for the uplink transmission and indicating the receive beam information for the downlink transmission, refer to the foregoing descriptions. Details are not described herein again. When the type of the first parameter is indicating both the transmit beam information for the uplink transmission and the receive beam information for the downlink transmission, the first parameter (that is, the single target reference signal resource in the first parameter) may be for determining both the transmit beam information for the uplink transmission and the receive beam for the downlink transmission (that is, determining both the transmit beam for the uplink transmission and the receive beam for the downlink transmission).

The following shows an example of a format of the first parameter.

### Example 11:

```
first parameter {
            type of the first parameter 
```

```
{select one of the three: indicating the transmit beam information for the
```

```
             uplink transmission, 
```

```
indicating the receive beam information for the downlink transmission, 
```

```
and             indicating both the transmit beam 
```

```
information for the uplink transmission and the receive beam
```

```
             information for the downlink transmission}
}
```

}In Example 11, the type of the first parameter may be indicating the transmit beam information for the uplink transmission, indicating the receive beam information for the downlink transmission, and indicating both the transmit beam information for the uplink transmission and the receive beam information for the downlink transmission.

In some other embodiments, the first parameter may include two or more target reference signal resources. This is not limited in this application. A quantity of the target reference signal resources included in the first parameter may be specified in a protocol, indicated by the network device, or reported by the terminal device. This is not limited in this embodiment of this application.

It can be learned from the foregoing descriptions that, when the first parameter includes the single reference signal resource, the type of the first parameter is the same as a resource type of the single target reference signal resource in the first parameter. In this case, in the first parameter, only either of the type of the first parameter and the resource type of the single target reference signal resource may be indicated, or both are indicated. This is not limited in this embodiment of this application.

It should be noted that, in this embodiment of this application, it may be specified that the first parameter can indicate both the transmit beam information for the uplink transmission and the receive beam information for the downlink transmission by using the single target reference signal resource only when the terminal device has uplink and downlink beam reciprocity. Alternatively, it may be stipulated that the first parameter can indicate both the transmit beam information for the uplink transmission and the receive beam information for the downlink transmission only when the terminal device has uplink and downlink beam reciprocity. In other words, a use condition of the first parameter is that the terminal device has uplink and downlink beam reciprocity.

Alternatively, it may be stipulated that an uplink reference signal resource can indicate the receive beam information for the downlink transmission or a downlink reference signal resource can indicate the transmit beam information for the uplink transmission only when the terminal device has uplink and downlink beam reciprocity.

In some embodiments, the terminal device may report, to the network device, that the terminal device has a capability of uplink and downlink beam reciprocity. This is not limited in this application.

In some other embodiments, the target reference signal resource in the foregoing implementations may be alternatively replaced with a target channel, for example, a PDCCH, a PDSCH, a PUCCH, a PUSCH, or a PRACH. This is not limited in this embodiment of this application. In other words, the target channel may indicate the transmit beam information for the uplink transmission and/or the receive beam information for the downlink transmission. For example, when the target channel is an uplink channel, a transmit beam of the uplink channel may be used as the transmit beam for the uplink transmission and/or the receive beam for the downlink transmission. When the target channel is a downlink channel, a receive beam of the downlink channel may be used as the transmit beam for the uplink transmission and/or the receive beam for the downlink transmission.

In this application, the first parameter may be referred to as a TCI-state, a unified-TCI, a spatial relation, a UL-TCI, or the like. The first parameter may alternatively have another name. This is not limited in this application.

The following specifically describes how the first parameter indicates the transmit beam information for the uplink transmission and/or the receive beam information for the downlink transmission by using a QCL configuration/indication. Specifically, Method 1 or Method 2 below may be for indication.

Method 1: No new QCL type is introduced. To be specific, the QCL type included in the first parameter is still existing typeA, typeB, typeC, and typeD. In this case, a function of QCL information of typeD needs to be extended or modified.

In an implementation, the function of the QCL information of typeD is extended to indicating either of the transmit beam information for the uplink transmission and the receive beam information for the downlink transmission. A specific one that is indicated may be further distinguished with reference to other conditions.

In an example, whether the QCL information of typeD specifically indicates the transmit beam information for the uplink transmission or the receive beam information for the downlink transmission depends on whether an indication of the QCL information corresponds to the uplink transmission or the downlink transmission. If the QCL information corresponds to the uplink transmission, that is, the QCL information is carried in signaling related to the uplink transmission (for example, the QCL information is indicated by DCI/a MAC CE for scheduling the uplink transmission), the QCL information is for determining the transmit beam information for the uplink transmission. If the QCL information corresponds to the downlink transmission, that is, the QCL information is carried in signaling related to the downlink transmission (for example, the QCL information is indicated by DCI/a MAC CE for scheduling the downlink transmission), the QCL information is for determining the receive beam information for the downlink transmission. For example, the uplink transmission may be a PUSCH, a PUCCH, an SRS, a random access message 1 or 3, or the like, and the downlink transmission may be a PDSCH, a PDCCH, a CSI-RS, a TRS, a random access message 2 or 4, or the like. This is not limited in this application.

In another example, a dedicated parameter (or sub-parameter) may indicate whether the QCL information of typeD is for determining the transmit beam information for the uplink transmission or the receive beam information for the downlink transmission. For example, the QCL information of typeD includes a parameter, indicating whether the QCL information is for determining the transmit beam information for the uplink transmission or the receive beam information for the downlink transmission.

It should be noted that, that the QCL information is for determining the transmit beam information for the uplink transmission means that the terminal device can determine the transmit beam information for the uplink transmission based on the QCL information, for example, may mean that the terminal device uses a transmit beam of an uplink reference signal resource included in the QCL information or a receive beam of a downlink reference signal resource included in the QCL information as an uplink transmit beam. That the QCL information is for determining the receive beam information for the downlink transmission means that the terminal device determines the receive beam information for the downlink transmission based on the QCL information, for example, may mean that the terminal device uses a transmit beam of an uplink reference signal resource included in the QCL information or a receive beam of a downlink reference signal resource included in the QCL information as a downlink receive beam.

In another implementation, the function of the QCL information of typeD is extended to indicating both the transmit beam information for the uplink transmission and the receive beam information for the downlink transmission.

In some embodiments, the network device may configure whether to use the QCL information of typeD to indicate both the transmit beam information for the uplink transmission and the receive beam information for the downlink transmission.

In some embodiments, the terminal device may report (for example, report capability information #1) whether QCL information of typeD can indicate both the transmit beam information for the uplink transmission and the receive beam information for the downlink transmission. When the terminal device reports that the QCL information of typeD can indicate both the transmit beam information for the uplink transmission and the receive beam information for the downlink transmission, the network device may use the QCL information of typeD to indicate both the transmit beam information for the uplink transmission and the receive beam information for the downlink transmission.

In some embodiments, the QCL information of typeD may further indicate common beam information. The common beam information includes the transmit beam information for the uplink transmission and/or the receive beam information for the downlink transmission (that is, may be for determining the transmit beam for the uplink transmission or the receive beam for the downlink transmission). In an example, a common beam may be for transmission of a plurality of channels, for example, an uplink/downlink control channel and an uplink/downlink data channel. Alternatively, a common beam may be for transmission of a plurality of cells. For example, the plurality of cells all use the common beam for transmission, and the plurality of cells may be a plurality of cells in a same frequency band, or may be a plurality of cells in different frequency bands. Alternatively, a common beam may be for both the uplink transmission and the downlink transmission.

In some embodiments, the network device may configure whether to use the QCL information of typeD indicating the common beam information.

In some embodiments, the terminal device may report (for example, report capability information #2) whether use of the QCL information of typeD indicating the common beam information is supported. When the terminal device reports that use of the QCL information of typeD indicating the common beam information is supported, the network device may use the QCL information of typeD indicating the common beam information.

Method 2: A new QCL type (for example, typeE, typeF, or typeG) is introduced. To be specific, the QCL type included in the first parameter includes not only existing typeA, typeB, typeC, and typeD, but also newly introduced typeE, typeF, or typeG. The new QCL type may indicate the transmit beam information for the uplink transmission, the new QCL type may indicate the receive beam information for the downlink transmission, the new QCL type may indicate both the transmit beam for the uplink transmission and the receive beam information for the downlink transmission, or the new QCL type may indicate common beam information.

In an implementation, QCL information of typeD indicates the receive beam information for the downlink transmission (that is, the same as existing typeD). In this case, QCL information of a QCL type (for example, QCL typeE/F/G) may indicate the transmit beam information for the uplink transmission. For example, in the downlink transmission, when only the QCL information of typeD is indicated (where the QCL information of typeE/F/G is not indicated), the QCL information of typeD may be for determining the receive beam information for the downlink transmission. For another example, in the uplink transmission, when only the QCL information of typeE/F/G is indicated (where the QCL information of typeD is not indicated), the QCL information of typeE/F/G may be for determining the transmit beam information for the uplink transmission.

Alternatively, in some other embodiments, QCL information of typeD may indicate the transmit beam information for the uplink transmission, and QCL information of typeE/F/G may indicate the receive beam information for the downlink transmission. For example, in the uplink transmission, when only the QCL information of typeD is indicated (where the QCL information of typeE/F/G is not indicated), the QCL information of typeD may be for determining the transmit beam information for the uplink transmission. For another example, in downlink transmission, when only QCL information of the typeE/F/G is indicated (QCL information of the typeD is not indicated), the QCL information of the typeE/F/G may be for determining the receive beam information for downlink transmission.

In some embodiments, the transmit beam information for the uplink transmission or QCL information may be updated by using MAC CE signaling, or the transmit beam information for the downlink transmission or QCL information may be updated by using MAC CE signaling. For example, in the MAC CE signaling, different bits (bit) may indicate an update of the transmit beam information for the uplink transmission/the QCL information and an update of the receive beam information for the downlink transmission/the QCL information. Alternatively, in the MAC CE signaling, one bit may specifically indicate whether the MAC CE is for updating the transmit beam information for the uplink transmission/the QCL information or for updating the receive beam information for the downlink transmission/the QCL information.

In another implementation, QCL information of a QCl type, for example, type E/F/G, indicates both the transmit beam information for the uplink transmission and the receive beam information for the downlink transmission. To be specific, provided that the QCL information of typeE/F/G is indicated to the terminal device, the terminal device determines the transmit beam information for the uplink transmission and the receive beam information for the downlink transmission by using the QCL information of typeE/F/G.

In another implementation, QCL information of a QCl type, for example, typeE/F/G, indicates the common beam information. For the common beam information, refer to the foregoing descriptions. Details are not described again.

In some embodiments, the network device may configure whether to use QCL information of the common beam/typeE/F/G.

In some embodiments, the terminal device may report (for example, report capability information #3) whether use of the common beam or QCL information of a QCL type corresponding to the common beam is supported. When the terminal device reports that use of the common beam or the QCL information of the QCL type corresponding to the common beam is supported, the network device may use the QCL information of the QCL type corresponding to the common beam.

In some optional embodiments, QCL information of a new QCL type (for example, typeH) may further indicate sidelink (sidelink) transmission beam information. This is not limited in this application.

In some optional embodiments, priorities of different types of QCL information may be specified. For example, there are priorities of QCL information for determining a downlink receive beam, QCL information for determining an uplink transmit beam, QCL information for determining both an uplink transmit beam and a downlink receive beam, and QCL information for determining a common beam. When the network device indicates a plurality of pieces of QCL information, the terminal device may determine, based on the priorities of the QCL information, which type of QCL information is for determining the transmit beam information for the uplink transmission and/or the receive beam information for the downlink transmission.

For example, when a priority of QCL information for determining both the transmit beam information for the uplink transmission and the receive beam information for the downlink transmission is higher than a priority of QCL information for determining the receive beam information for the downlink transmission, and the network device indicates both the QCL information for determining the receive beam information for the downlink transmission and the QCL information for determining both the transmit beam information for the uplink transmission and the receive beam for the downlink transmission, the terminal device may determine the receive beam information for the downlink transmission by using the QCL information for determining both the transmit beam information for the uplink transmission and the receive beam information for the downlink transmission.

For another example, when a priority of QCL information for determining the common beam information is higher than a priority of QCL information for determining the receive beam information for the downlink transmission, and the network device indicates both the QCL information for determining the receive beam information for the downlink transmission and the QCL information for determining the common beam information, the terminal device may determine the receive beam information for the downlink transmission by using the QCL information for determining the common beam information.

For another example, when a priority of QCL information for determining both the transmit beam information for the uplink transmission and the receive beam information for the downlink transmission is higher than a priority of QCL information for determining the transmit beam information for the uplink transmission, and the network device indicates both the QCL information for determining the transmit beam information for the uplink transmission and the QCL information for determining both the transmit beam information for the uplink transmission and the receive beam information for the downlink transmission, the terminal device may determine the transmit beam information for the uplink transmission by using the QCL information for determining both the transmit beam information for the uplink transmission and the receive beam information for the downlink transmission.

For another example, when a priority of QCL information for determining the common beam information is higher than a priority of QCL information for determining the transmit beam information for the uplink transmission, and the network device indicates both the QCL information for determining the transmit beam information for the uplink transmission and the QCL information for determining the common beam information, the terminal device may determine the transmit beam information for the uplink transmission by using the QCL information for determining the common beam information.

For another example, when a priority of QCL information for determining the common beam information is higher than a priority of QCL information for determining both the transmit beam information for the uplink transmission and the receive beam information for the downlink transmission, and the network device indicates both the QCL information for determining both the transmit beam information for the uplink transmission and the receive beam information for the downlink transmission and the QCL information for determining the common beam information, the terminal device may determine the transmit beam information for the uplink transmission by using the QCL information for determining the common beam information.

In Method 1 and Method 2 above, QCL information may be carried in the first parameter for indication. This is not limited in this application.

In some embodiments, the network device may further indicate, to the terminal device, a quantity of pieces of different types of QCL information included in the first parameter. For example, a maximum of three pieces of QCL information may be included in the first parameter. One piece of QCL information is for determining time/frequency offset information, one piece of QCL information is for determining the transmit beam information for the uplink transmission, and one piece of QCL information is for determining the receive beam information for the downlink transmission.

In some optional embodiments, the terminal device may report, to the network device, a quantity of pieces of QCL information that may be included in the first parameter. The network device may determine, based on a quantity that is of pieces of QCL information that may be included in the first parameter and that is reported by the terminal device, how to configure the first parameter.

For example, when a quantity that is of pieces of QCL information in the first parameter and that is reported by the terminal device by using a capability is 2, the network device configures a maximum of two pieces of QCL information in the first parameter, where one piece of QCL information is for determining time/frequency offset information, and one piece of QCL information is for determining the receive beam information for the downlink transmission; one piece of QCL information is for determining time/frequency offset information, and one piece of QCL information is for determining the transmit beam information for the uplink transmission; one piece of QCL information is for determining time/frequency offset information, and one piece of QCL information is for determining the transmit beam information for the uplink transmission or the receive beam information for the downlink transmission; or one piece of QCL information is for determining time/frequency offset information, and one piece of QCL information is for determining the transmit beam information for the uplink transmission and the receive beam information for the downlink transmission.

For another example, when a quantity that is of pieces of QCL information in the first parameter and that is reported by the terminal device by using a capability is 3, the network device configures a maximum of three pieces of QCL information in the first parameter, where one piece of QCL information is for determining time/frequency offset information, one piece of QCL information is for determining the receive beam information for the downlink transmission, and one piece of QCL information is for determining the transmit beam information for the uplink transmission; one piece of QCL information is for determining time/frequency offset information, one piece of QCL information is for determining the receive beam information for the downlink transmission, and one piece of QCL information is for determining the transmit beam information for the uplink transmission and the receive beam information for the downlink transmission; one piece of QCL information is for determining time/frequency offset information, one piece of QCL information is for determining the transmit beam information for the uplink transmission, and one piece of QCL information is for determining the transmit beam information for the uplink transmission and the receive beam information for the downlink transmission; or one piece of QCL information is for determining the receive beam information for the downlink transmission, one piece of QCL information is for determining the transmit beam information for the uplink transmission, and one piece of QCL information is for determining the transmit beam information for the uplink transmission and the receive beam information for the downlink transmission.

In some optional embodiments of this application, the first parameter may include at least one of the following information:
a component carrier (component carrier, CC)/cell identifier (ID), a BWP ID, the target reference signal resource, the QCL type, type information of the first parameter, type information of the target reference signal resource, a path loss measurement reference signal resource, a power control parameter, an identifier of a terminal antenna panel, an identifier of a transmission site, a physical cell identifier PCI, and a sounding reference signal SRS resource for the uplink transmission.

The CC/cell ID represents a cell to which a target reference signal belongs.

The BWP ID indicates a BWP to which the target reference signal belongs.

The target reference signal resource is for determining the transmit beam information for the uplink transmission and/or the receive beam information for the downlink transmission. Refer to the foregoing descriptions.

The QCL type indicates a QCL relationship that is satisfied with the target reference signal. For example, when the QCL type is a type D, it indicates that the two use a same receive beam; when the QCL type is typeE newly defined in this embodiment of this application, it indicates that the two use a same transmit beam; or when the QCL type is typeF newly defined in this embodiment of this application, it indicates that the two use a same transmit beam and a same receive beam.

The type information of the first parameter indicates the type of the first parameter. For the type of the first parameter, refer to the foregoing descriptions.

The type information of the target reference signal resource indicates the resource type of the target reference signal resource. For the resource type of the target reference signal resource, refer to the foregoing descriptions.

The path loss measurement reference signal resource is for measuring a path loss of signal propagation, to perform power control on the uplink transmission.

The power control parameter is for performing power control on the uplink transmission or the downlink transmission, and includes but is not limited to a parameter P0-PUCCH-Id, a closed loop power control index (closedLoopIndex), and the like.

For the identifier of the terminal antenna panel, refer to the foregoing descriptions.

The identifier of the transmission site is, for example, an identifier of a transmission and reception point (transmission and reception point, TRP). The identifier of the TRP may also be represented as an identifier of a control resource group (CORESET Pool).

The physical cell identifier (Physical cell ID, PCI) is used in the downlink transmission, and indicates a physical cell from which a signal transmitted by the network device is sent.

In some possible descriptions, the information included in the first parameter may also be referred to as a sub-parameter of the first parameter. This is not limited in this application.

In some optional embodiments, the terminal device may further report capability information #4 to the network device. The capability information #4 indicates whether the terminal device supports use of the first parameter to indicate the transmit beam information for the uplink transmission and/or the receive beam information for the downlink transmission. In other words, the capability information #4 may indicate whether the terminal device has a capability of determining the transmit beam for the uplink transmission and/or the receive beam for the downlink transmission based on a single parameter (for example, the first parameter) or a single target reference signal resource (for example, the single target reference signal resource in the first parameter). For example, the terminal device may send the capability information #4 to the network device by using terminal capability parameter reporting information.

Correspondingly, the network device receives the capability information #4. Optionally, the network device may determine the first indication information based on the capability information #4. That is, the network device may determine, based on the capability information #4, that the terminal device supports determining, based on the first parameter, the transmit beam information for the uplink transmission and/or the receive beam information for the downlink transmission, and determine the first indication information for the terminal device.

In some other optional embodiments, the terminal device may further report, to the network device, that the terminal device does not have the capability of determining the transmit beam for the uplink transmission and/or the receive beam for the downlink transmission based on the single parameter (for example, the first parameter) or the single target reference signal resource (for example, the single target reference signal resource in the first parameter). This is not limited in this embodiment of this application.

In some optional embodiments, the network device may further send second indication information to the terminal device, where the second indication information indicates to use the first parameter to indicate the transmit beam information for the uplink transmission and/or the receive beam information for the downlink transmission. In other words, the second indication information may be for configuring to indicate the transmit beam information for the uplink transmission and/or the receive beam information for the downlink transmission together by the single parameter (for example, the first parameter) or the single target reference signal resource (for example, the single target reference signal resource in the first parameter).

In an example, the network device may send the second indication information to the terminal device by using RRC signaling, that is, configure, by using the RRC signaling, to use the first parameter to indicate the transmit beam information for the uplink transmission and/or the receive beam information for the downlink transmission. This is not limited in this embodiment of this application.

520: The network device sends the first indication information to the terminal device. Correspondingly, the terminal device receives the first indication information.

In some optional embodiments of this application, the first indication information may be carried in one or more of the following signaling:
downlink control information DCI;
a media access control MAC control element CE; and
radio resource control RRC signaling.

Alternatively, in some embodiments, the first indication information may be carried in other signaling. This is not limited in this application.

Optionally, in this embodiment of this application, an indication manner of the first parameter may be determined based on content included in the first parameter. In other words, when the first parameter includes a (or some) sub-parameter, or a value of a (or some) sub-parameter included in the first parameter is a specific value, the first parameter may be indicated by using a piece of (or some) specific signaling, or the first parameter may be indicated only by using signaling other than a piece of (or some) specific signaling (that is, the piece of (or some) specific signaling cannot indicate the first parameter). Herein, the (or some) sub-parameter may be any one (or more) of the sub-parameters included in the first parameter. This is not limited. Herein, the piece of (or some) specific signaling may be, for example, one or more of DCI signaling, MAC CE signaling, or RRC signaling, or may be other signaling. This is not limited.

Herein, indicating the first parameter by signaling may be: sending the first indication information to the terminal device by using the signaling, configuring the first parameter for the terminal device by using the signaling (that is, the signaling may include configuration information of the first parameter), or activating the first parameter by using the signaling (that is, the signaling may include an index or an identifier of the to-be-activated first parameter). This is not limited in this embodiment of this application.

In a first possible case, when the first parameter includes the PCI, or a value of the PCI is a first specific value (for example, a PCI of another physical cell or a PCI different from a PCI corresponding to a current serving cell), the first parameter can be indicated only by the RRC signaling. In other words, in this case, the first parameter cannot be indicated by the MAC CE signaling or the DCI signaling, or the first parameter indicated by the MAC CE signaling or the DCI signaling cannot include the PCI.

Alternatively, when the first parameter includes the PCI, or a value of the PCI is a second specific value, the first parameter can be indicated only by the MAC CE signaling. In other words, in this case, the first parameter cannot be indicated by the RRC signaling or the DCI signaling, or the first parameter indicated by the RRC signaling or the DCI signaling cannot include the PCI.

Alternatively, when the first parameter includes the PCI, or a value of the PCI is a third specific value, the first parameter can be indicated only by the DCI signaling. In other words, in this case, the first parameter cannot be indicated by the MAC CE signaling or the RRC signaling, or the first parameter indicated by the MAC CE information or the RRC signaling cannot include the PCI.

Alternatively, when the first parameter includes the PCI, or a value of the PCI is a fourth specific value, the first parameter can be indicated only by the RRC signaling or the MAC CE signaling. In other words, in this case, the first parameter cannot be indicated by the DCI signaling, or the first parameter indicated by the DCI signaling cannot include the PCI.

Alternatively, when the first parameter includes the PCI, or a value of the PCI is a fifth specific value, the first parameter can be indicated only by using signaling other than the DCI signaling. In other words, the first parameter indicated by the DCI cannot include the PCI, or a value of the PCI cannot be the fifth specific value.

Alternatively, when the first parameter includes the PCI, or a value of the PCI is a sixth specific value, the first parameter can be indicated only by signaling other than the MAC CE signaling and the DCI signaling. In other words, the first parameter indicated by the MAC CE signaling or the DCI signaling cannot include the PCI, or a value of the PCI cannot be the sixth specific value.

In a second possible case, when the QCL type included in the first parameter is a seventh specific value, the first parameter can be indicated only by the RRC signaling.

Alternatively, when the QCL type included in the first parameter is an eighth specific value, the first parameter can be indicated only by the MAC CE signaling.

Alternatively, when the QCL type included in the first parameter is a ninth specific value, the first parameter can be indicated only by the DCI signaling.

Alternatively, when the QCL type included in the first parameter is a tenth specific value, the first parameter can be indicated only by the RRC signaling or the MACE signaling.

Alternatively, when the QCL type included in the first parameter is an eleventh specific value, the first parameter can be indicated only by signaling other than the DCI signaling. In other words, the QCL type in the first parameter indicated by the DCI signaling cannot be the eleventh specific value.

Alternatively, when the QCL type included in the first parameter is a twelfth specific value, the first parameter can be indicated only by signaling other than the MAC CE signaling and the DCI signaling. In other words, the QCL type in the first parameter indicated by the MAC CE signaling or the DCI signaling cannot be the twelfth specific value.

In a third possible case, when the first parameter includes a plurality of target reference signal resources, the first parameter can be indicated only by the RRC signaling.

Alternatively, when the first parameter includes a plurality of target reference signal resources, the first parameter can be indicated only by the MAC CE signaling.

Alternatively, when the first parameter includes a plurality of target reference signal resources, the first parameter can be indicated only by the DCI signaling.

Alternatively, when the first parameter includes a plurality of target reference signal resources, the first parameter can be indicated only by the RRC signaling or the MAC CE signaling.

Alternatively, when the first parameter includes a plurality of target reference signal resources, the first parameter can be indicated only by signaling other than DCI signaling. In other words, the first parameter indicated by the DCI signaling cannot include the plurality of target reference signal resources.

Alternatively, when the first parameter includes a plurality of target reference signal resources, the first parameter can be indicated only by signaling other than the MAC CE signaling and the DCI signaling. In other words, the first parameter indicated by the MAC CE signaling and the first parameter indicated by the DCI signaling cannot include the plurality of target reference signal resources.

In a fourth possible case, when the type information of the first parameter included in the first parameter is a thirteenth specific value, the first parameter can be indicated only by the RRC signaling.

Alternatively, when the type information of the first parameter included in the first parameter is a fourteenth specific value, the first parameter can be indicated only by the MAC CE signaling.

Alternatively, when the type information of the first parameter included in the first parameter is a fifteenth specific value, the first parameter can be indicated only by the DCI signaling.

Alternatively, when the type information of the first parameter included in the first parameter is a sixteenth specific value, the first parameter can be indicated only by the RRC signaling or the MAC CE signaling.

Alternatively, when the type information of the first parameter included in the first parameter is a seventeenth specific value, the first parameter can be indicated only by signaling other than the DCI signaling. In other words, the type information of the first parameter in the first parameter indicated by the DCI signaling cannot be the seventeenth specific value.

Alternatively, when the type information of the first parameter included in the first parameter is an eighteenth specific value, the first parameter can be indicated only by signaling other than MAC CE signaling and DCI signaling. In other words, the type information of the first parameter in the first parameter indicated by the MAC CE signaling and the DCI signaling cannot be the eighteenth specific value.

In a fifth possible case, when the first parameter includes the power control parameter (for example, the path loss measurement reference signal resource, p0-PUCCH-Id, or closedLoopIndex), or the power control parameter is a nineteenth specific value, the first parameter can be indicated only by the RRC signaling.

Alternatively, when the first parameter includes the power control parameter (for example, the path loss measurement reference signal resource, p0-PUCCH-Id, or closedLoopIndex), or the power control parameter is a twentieth specific value, the first parameter can be indicated only by the MAC CE signaling.

Alternatively, when the first parameter includes the power control parameter (for example, the path loss measurement reference signal resource, p0-PUCCH-Id, or closedLoopIndex), or the power control parameter is a twenty-first specific value, the first parameter can be indicated only by the DCI signaling.

Alternatively, when the first parameter includes the power control parameter (for example, the path loss measurement reference signal resource, p0-PUCCH-Id, or closedLoopIndex), or the power control parameter is a twenty-second specific value, the first parameter can be indicated only by the RRC signaling or the MAC CE signaling.

Alternatively, when the first parameter includes the power control parameter (for example, the path loss measurement reference signal resource, p0-PUCCH-Id, or closedLoopIndex), or the power control parameter is a twenty-third specific value, the first parameter can be indicated only by signaling other than the DCI signaling. In other words, the first parameter indicated by the DCI signaling cannot include the power control parameter (for example, the path loss measurement reference signal resource, p0-PUCCH-Id, or closedLoopIndex), or the power control parameter cannot be the twenty-third specific value.

Alternatively, when the first parameter includes the power control parameter (for example, the path loss measurement reference signal resource, p0-PUCCH-Id, or closedLoopIndex), or the power control parameter is a twenty-fourth specific value, the first parameter can be indicated only by signaling other than the MAC CE signaling and the DCI signaling. In other words, the first parameter indicated by the MAC CE signaling and the DCI signaling cannot include the power control parameter (for example, the path loss measurement reference signal resource, p0-PUCCH-Id, or closedLoopIndex), or the power control parameter cannot be the twenty-fourth value.

In the fifth possible case, when the first parameter includes antenna panel information, or the antenna panel information is a twenty-fifth specific value, the first parameter can be indicated only by the RRC signaling.

Alternatively, when the first parameter includes antenna panel information, or the antenna panel information is a twenty-sixth specific value, the first parameter can be indicated only by the MAC CE signaling.

Alternatively, when the first parameter includes antenna panel information, or the antenna panel information is a twenty-seventh specific value, the first parameter can be indicated only by the DCI signaling.

Alternatively, when the first parameter includes antenna panel information, or the antenna panel information is a twenty-eighth specific value, the first parameter can be indicated only by the RRC signaling or the MAC CE signaling.

Alternatively, when the first parameter includes antenna panel information, or the antenna panel information is a twenty-ninth specific value, the first parameter can be indicated only by signaling other than the DCI signaling. In other words, the first parameter indicated by the DCI signaling cannot include the antenna panel information, or the antenna panel information cannot be the twenty-ninth specific value.

Alternatively, when the first parameter includes antenna panel information, or the antenna panel information is a thirtieth specific value, the first parameter can be indicated only by signaling other than the MAC CE signaling and the DCI signaling. In other words, the first parameter indicated by the MAC CE signaling or the DCI signaling cannot include the antenna panel information, or the antenna panel information cannot be the thirtieth specific value.

The antenna panel information may be information that explicitly indicates the antenna panel, such as the identifier of the antenna panel, or may be other information that implicitly indicates the antenna panel, such as an antenna port (for example, a CSI-RS port, an SRS port, a DMRS port, a PTRS port, a CRS port, a TRS port, or an SSB port), an antenna port group, a resource (for example, a CSI-RS resource, an SRS resource, a DMRS resource, a PTRS resource, a CRS resource, a TRS resource, or an SSB resource), a resource group, a channel (for example, DCI, a CORESET, a PUCCH, a PUSCH, a PRACH, a PDSCH, a PDCCH, or a PBCH), a channel group, a beam (a control channel beam), QCL, a TCI-state, a spatial relation, an index configured in the QCL, the TCI-state, or the spatial relation, a beam group (a control channel beam group), a QCL group, a TCI-state group, or a spatial relation group. In other words, the antenna panel/panel in this application may be replaced with the foregoing content.

In the fifth possible case, when the first parameter includes TRP information, or the TRP information is a thirty-first specific value, the first parameter can be indicated only by the RRC signaling.

Alternatively, when the first parameter includes TRP information, or the TRP information is a thirty-second specific value, the first parameter can be indicated only by the MAC CE signaling.

Alternatively, when the first parameter includes TRP information, or the TRP information is a thirty-third specific value, the first parameter can be indicated only by the DCI signaling.

Alternatively, when the first parameter includes TRP information, or the TRP information is a thirty-fourth specific value, the first parameter can be indicated only by the RRC signaling or the MAC CE signaling.

Alternatively, when the first parameter includes TRP information, or the TRP information is a thirty-fifth specific value, the first parameter can be indicated only by signaling other than the DCI signaling. In other words, the first parameter indicated by the DCI signaling cannot include the TRP information, or the TRP information cannot be the thirty-fifth specific value.

Alternatively, when the first parameter includes TRP information, or the TRP information is a thirty-sixth specific value, the first parameter can be indicated only by signaling other than the MAC CE signaling and the DCI signaling. In other words, the first parameter indicated by the MAC CE signaling or the DC signaling cannot include the TRP information, or the TRP information cannot be the thirty-sixth specific value.

The TRP information may be information that explicitly indicates the TRP, such as the identifier of the TRP, or may be other information that implicitly indicates the TRP, such as an antenna port (for example, a CSI-RS port, an SRS port, a DMRS port, a PTRS port, a CRS port, a TRS port, or an SSB port), an antenna port group, a resource (for example, a CSI-RS resource, an SRS resource, a DMRS resource, a PTRS resource, a CRS resource, a TRS resource, or an SSB resource), a resource group, a channel (for example, DCI, a CORESET, a PUCCH, a PUSCH, a PRACH, a PDSCH, a PDCCH, or a PBCH), a channel group, a beam (a control channel beam), QCL, a TCI-state, a spatial relation, an index configured in the QCL, the TCI-state, or the spatial relation, a beam group (a control channel beam group), a QCL group, a TCI-state group, or a spatial relation group. In other words, the antenna panel/panel in this application may be replaced with the foregoing content.

Alternatively, in some embodiments, the network device may further determine, according to the following Table 1, signaling that may indicate the first parameter. "4" indicates that corresponding signaling may indicate the first parameter, and "×" indicates that corresponding signaling cannot indicate the first parameter.

**Table 1**

| Sequence number | Content of the first parameter | RRC | MAC CE | DCI |
|---|---|---|---|---|
| 1 | PCI | √ | × | × |
| 2 | Terminal antenna panel ID | √ | √ | × |
| 3 | TRP ID | √ | √ | √ |
| 4 | PL RS ID | √ | √ | × |
| 5 | More than one reference signal resource | √ | √ | × |
| 6 | QCL information of a new type (for example, typeE, typeF, or typeG) | √ | √ | √ |
| | ... | | | |

As shown in Table 1, when content of the first parameter includes the PCI, the first parameter may be indicated by the RRC signaling, and cannot be indicated by the MAC CE signaling or the DCI signaling. When content of the first parameter includes the terminal antenna panel ID, the first parameter may be indicated by the RRC signaling or the MCE signaling, and cannot be indicated by the DCI signaling. When the first parameter includes the TRP ID, the first parameter may be indicated by the RRC signaling, the MAC CE, or the DCI signaling. When the first parameter includes the RL RS ID, the first parameter may be indicated by the RRC signaling or the MAC CE signaling, and cannot be indicated by the DCI signaling. When the first parameter includes the more than one reference signal resource (namely, the target reference signal resource), the first parameter may be indicated by the RRC signaling or the MAC CE signaling, and cannot be indicated by the DCI signaling. When the first parameter includes the QCL information of the new QCL type (for example, typeE, typeF, or typeG), the first parameter may be indicated by the RRC signaling, the MAC CE signaling, or the DCI signaling. Alternatively, which signaling indicates the first parameter may be determined based on another sub-parameter in the first parameter. This is not limited in this application.

In this embodiment of this application, because times-to-apply of different content information in the first parameter are different, different signaling (for example, the RRC signaling, the MAC CE signaling, or the DCI signaling) may be for sending the first parameter carrying specific content, to adapt to a time-to-apply of information about the specific content in the first parameter.

530: The terminal device performs data transmission based on the transmit beam information and/or the receive beam information that are/is indicated by the first parameter.

For example, the terminal device may transmit uplink data based on the transmit beam information that is for the uplink transmission and that is indicated by the first parameter.

In some optional embodiments, the network device may further receive uplink transmission data from the terminal device, where the uplink transmission data is sent by the terminal device based on the transmit beam information indicated by the first parameter. For example, the network device may receive the uplink transmission data by using the receive beam information corresponding to the transmit beam information that is for the uplink transmission and that is in the first parameter indicated by the first indication information.

For example, the terminal device may transmit downlink data based on the receive beam information that is for the downlink transmission and that is indicated by the first parameter.

In some optional embodiments, the network device may further send downlink transmission data to the terminal device, and the terminal device may receive the downlink transmission data based on the receive beam information indicated by the first parameter. For example, the network device may send the downlink transmission data by using the transmit beam information corresponding to the receive beam information that is for the downlink transmission and that is in the first parameter indicated by the first indication information.

Herein, that the terminal device performs data transmission by using the transmit beam information indicated by the first parameter means that the terminal device sends uplink data by using a transmit beam corresponding to the transmit beam information indicated by the first parameter; and that the terminal device performs data transmission by using the receive beam information indicated by the first parameter means that the terminal device receives downlink data based on a receive beam corresponding to the receive beam information indicated by the first parameter.

That the network device receives the uplink transmission data from the terminal device by using the receive beam information corresponding to the transmit beam information indicated by the first parameter means that the network device receives the uplink transmission data by using the receive beam corresponding to the receive beam information; and that the network device sends the downlink transmission data to the terminal device by using the transmit beam information corresponding to the receive beam information indicated by the first parameter means that the network device sends the downlink transmission data based on the transmit beam corresponding to the transmit beam information.

Therefore, in this embodiment of this application, the network device sends the first indication information to the terminal device, to indicate the terminal device to perform data transmission based on the first parameter. Because the first parameter indicates the transmit beam information for the uplink transmission and/or the receive beam information for the downlink transmission, in this embodiment of this application, a single parameter can indicate the transmit beam information for the uplink transmission and the receive beam information for the downlink transmission of the terminal device together. Compared with a conventional technology in which different parameters independently indicate the transmit beam information for the uplink transmission and the receive beam information for the downlink transmission, this application can simplify an uplink and downlink beam indication procedure, to reduce signaling overheads.

It should be noted that the target reference signal resource in this embodiment of this application is merely used as an example of a reference signal resource included in the first parameter, and the first parameter may alternatively include another reference signal resource. This is not limited. In some descriptions, the "target reference signal resource" may alternatively be replaced with or briefly referred to as a "reference signal resource", and all fall within the protection scope of this embodiment of this application.

In some optional embodiments, after a time-to-apply after an indication moment of the first parameter, the terminal device may perform data transmission based on the transmit beam information and/or the receive beam information that are/is indicated by the first parameter.

In an example, after the network device indicates the first parameter to the terminal device, the first parameter is not necessarily applicable immediately. For example, the network device sends the first indication information at a moment T1, to indicate the terminal device to perform data transmission by using the transmit beam information and/or the receive beam information that are/is indicated by the first parameter. Correspondingly, after receiving the first indication information, the terminal device may determine the transmit beam information and/or the receive beam information for data transmission by using the first parameter only at a moment T2. Herein, the moment T1 may be referred to as the indication moment of the first parameter, the moment T2 may be referred to as an applicable moment of the first parameter, and a time difference between the moment T1 and the moment T2 may be referred to as the time-to-apply of the first parameter. Based on this, a time-to-apply may be specified, and it is required that the first parameter be applicable only at or after a corresponding moment (the indication moment+the time-to-apply).

In some other optional embodiments, the indication moment of the first parameter may be a moment at which the terminal device receives the first indication information. This is not limited in this embodiment of this application.

The time-to-apply may be related to the content of the first parameter. For example, when the first parameter includes specific information, the time-to-apply of the first parameter is a specific value. Herein, the specific information may be, for example, the information included in the first parameter.

For example, when the first parameter includes the PCI, the time-to-apply of the first parameter may be a first time-to-apply, and the first time-to-apply may be a measurement gap (measurement gap) of neighboring cell measurement/neighboring frequency measurement.

In this way, the time-to-apply of the first parameter is set to the measurement gap of the neighboring cell measurement/neighboring frequency measurement, so that the first parameter is applicable after the neighboring cell/neighboring frequency measurement is completed.

For another example, when the first parameter includes the panel ID, the time-to-apply of the first parameter may be a second time-to-apply, and the second time-to-apply may be a time required for activating the panel, for example, 224 or 336 orthogonal frequency division multiplexing (orthogonal frequency divided multiplexing, OFDM) symbols.

In this way, the time-to-apply of the first parameter is set to the time required for activating the panel, so that the first parameter is applicable after the panel is activated.

For another example, when the first parameter includes the TRP ID, the time-to-apply of the first parameter may be a third time-to-apply, and the third time-to-apply may be a time required by uplink timing of the TRP.

In this way, the time-to-apply of the first parameter is set to the time required for the uplink timing of the TRP, so that the first parameter is applicable after the uplink timing of the TRP.

For another example, when the first parameter includes a path loss measurement reference signal, the time-to-apply corresponding to the first parameter may be a fourth time-to-apply, and the fourth time-to-apply may be a time required for measuring the path loss reference signal, for example, a time for filtering, that is, a time of measuring the path loss measurement reference signal for N times, where N may be equal to 5.

In this way, the time-to-apply of the first parameter is set to the time required for measuring the path loss reference signal, so that the first parameter is applicable after measurement of the path loss reference signal is completed.

In some embodiments, when each of a plurality of pieces of information included in the first parameter corresponds to one time-to-apply, a largest time-to-apply in a plurality of times-to-apply corresponding to the plurality of pieces of information is used as the time-to-apply of the first parameter. In this way, it can be ensured that all information in the first parameter has been applicable.

In some other embodiments, when each of a plurality of pieces of information included in the first parameter corresponds to one time-to-apply, a smallest time-to-apply in a plurality of times-to-apply corresponding to the plurality of pieces of information may be used as the time-to-apply of the first parameter. In this way, the first parameter is applicable as soon as possible after indication.

In some other embodiments, when each of a plurality of pieces of information included in the first parameter corresponds to one time-to-apply, each of the plurality of pieces of information is applicable by using the corresponding time-to-apply.

In other words, each piece of information in the first parameter is applicable independently based on the time-to-apply corresponding to the information. In other words, when the times-to-apply corresponding to the plurality of pieces of information are different, the information does not need to be applicable based on a unified time-to-apply, but each piece of information is applicable based on the time-to-apply corresponding to the information.

In this way, the parameters in the first parameter are applicable based on times-to-apply thereof, so that each piece of information in the first parameter is applicable as soon as possible.

For example, the terminal device may obtain the time-to-apply of the first parameter or the time-to-apply corresponding to the information in the first parameter in advance. For example, the time-to-apply may be a value specified in a protocol, reported by the terminal device (for example, reported by using a terminal capability reporting process), or configured by the network device. This is not limited in this embodiment of this application.

It may be understood that, in the foregoing embodiments of this application, the method implemented by the access network device may alternatively be implemented by a component (for example, a chip or a circuit) that can be used in the access network device, and the method implemented by the terminal device may alternatively be implemented by a component (for example, a chip or a circuit) that can be used in the terminal device.

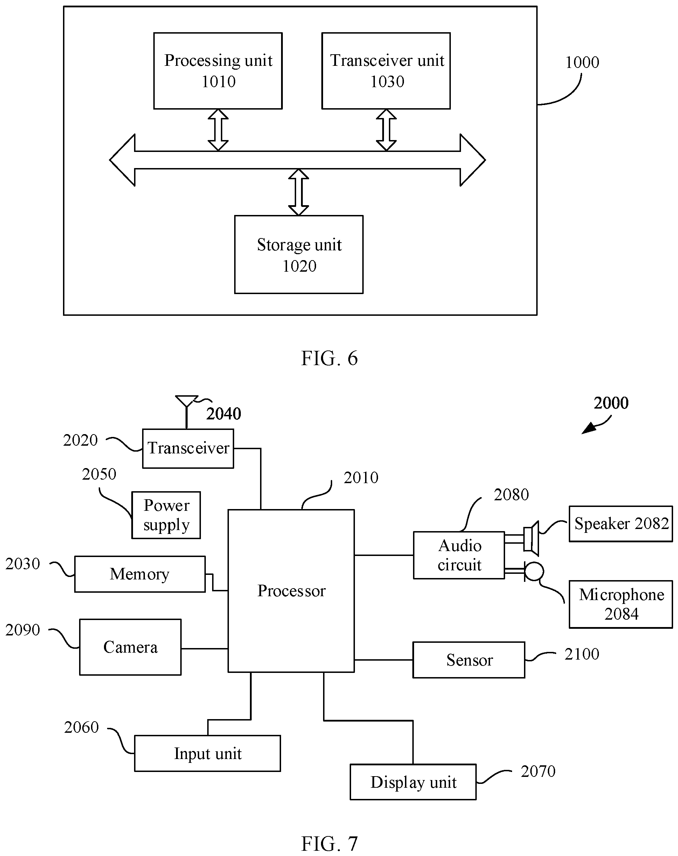

According to the foregoing method, FIG. 6 is a schematic diagram of a wireless communication apparatus 600 according to an embodiment of this application.

In some embodiments, the apparatus 600 may be a terminal device, or may be a chip or a circuit, for example, a chip or a circuit that may be disposed in the terminal device. In some embodiments, the apparatus 1000 may be a network device, or may be a chip or a circuit, for example, a chip or a circuit that may be disposed in the network device.

The apparatus 1000 may include a processing unit 1010 (that is, an example of a processor) and a transceiver unit 1030.

Optionally, the transceiver unit 1030 may be implemented by using a transceiver, a transceiver-related circuit, or an interface circuit.

Optionally, the apparatus may further include a storage unit 1020. In a possible manner, the storage unit 1020 is configured to store instructions. Optionally, the storage unit may also be configured to store data or information. The storage unit 1020 may be implemented by using a memory.

In a possible design, the processing unit 1010 may be configured to execute the instructions stored in the storage unit 1020, so that the apparatus 1000 implements the steps performed by the terminal device in the foregoing method.

Further, the processing unit 1010, the storage unit 1020, and the transceiver unit 1030 may communicate with each other by using an internal connection path to transfer a control signal and/or a data signal. For example, the storage unit 1020 is configured to store a computer program, and the processing unit 1010 may be configured to invoke the computer program from the storage unit 1020 and run the computer program, to control the transceiver unit 1030 to receive a signal and/or send a signal, to complete the steps of the terminal device in the foregoing method.

In a possible design, the processing unit 1010 may be configured to execute the instructions stored in the storage unit 1020, so that the apparatus 1000 implements the steps performed by the network device in the foregoing method.

Further, the processing unit 1010, the storage unit 1020, and the transceiver unit 1030 may communicate with each other by using an internal connection path to transfer a control signal and/or a data signal. For example, the storage unit 1020 is configured to store a computer program, and the processing unit 1010 may be configured to invoke the computer program from the storage unit 1020 and run the computer program, to control the transceiver unit 1030 to receive a signal and/or send a signal, to complete the steps of the network device in the foregoing method.

The storage unit 1020 may be integrated into the processing unit 1010, or may be disposed separately from the processing unit 1010.

Optionally, if the apparatus 1000 is a communication device, the transceiver unit 1030 may include a receiver and a transmitter. A receiver and a transmitter may be a same physical entity or different physical entities. When the receiver and the transmitter are the same physical entity, the receiver and the transmitter may be collectively referred to as a transceiver.

Optionally, if the apparatus 1000 is a chip or a circuit, the transceiver unit 1030 may include an input interface and an output interface.

In an implementation, it may be considered that a function of the transceiver unit 1030 is implemented by using a transceiver circuit or a transceiver-dedicated chip. It may be considered that the processing unit 1010 is implemented by using a dedicated processing chip, a processing circuit, a processing unit, or a general-purpose chip.

In another implementation, it may be considered that the communication device (for example, the network device or the terminal device) provided in this embodiment of this application is implemented by using a general-purpose computer. That is, program code for implementing functions of the processing unit 1010 and the transceiver unit 1030 is stored in the storage unit 1020, and a general-purpose processing unit implements the functions of the processing unit 1010 and the transceiver unit 1030 by executing the code in the storage unit 1020.

In some embodiments, when the apparatus 1000 is the terminal device or the chip or the circuit disposed in the terminal device, the transceiver unit 1030 is configured to receive first indication information, where the first indication information indicates a terminal device to perform data transmission based on a first parameter, and the first parameter indicates transmit beam information for uplink transmission and/or receive beam information for downlink transmission.

The processing unit 1010 is configured to perform data transmission based on the transmit beam information and/or the receive beam information that are/is indicated by the first parameter.

In some embodiments, the transceiver unit 1030 may be further configured to perform data transmission based on the transmit beam information and/or the receive beam information that are/is indicated by the first parameter.

In some possible implementations, the first parameter includes a single target reference signal resource, and the target reference signal resource indicates both the transmit beam information for the uplink transmission and the receive beam information for the downlink transmission.

In some possible implementations, the first parameter includes a single target reference signal resource, and the target reference resource indicates the transmit beam information for the uplink transmission or the receive beam information for the downlink transmission.

In some possible implementations, the first parameter includes a single target reference signal resource, and the target reference resource indicates the transmit beam information for the uplink transmission or the receive beam information for the downlink transmission, or indicate both the transmit beam information for the uplink transmission and the receive beam information for the downlink transmission.

In some possible implementations, the first parameter includes a first target reference signal resource and a second target reference signal resource, the first target reference signal resource indicates the transmit beam information for the uplink transmission, and the second target reference signal resource indicates the receive beam information for the downlink transmission.

In some possible implementations, the indicating the transmit beam information for the uplink transmission and the indicating the receive beam information for the downlink transmission are determined based on an indication order of the first target reference signal resource and the second target reference signal resource in the first parameter.

In some possible implementations, the first parameter further indicates a type of a target reference signal resource in the first parameter, and the type of the target reference signal resource includes at least one of the following:
indicating the transmit beam information for the uplink transmission;
indicating the receive beam information for the downlink transmission; and
indicating both the transmit beam information for the uplink transmission and the receive beam information for the downlink transmission.

In some possible implementations, the first parameter further includes a type field corresponding to the target reference signal resource, and the type field indicates the type of the target reference signal resource corresponding to the type field.

In some possible implementations, the first parameter further includes a QCL type of the target reference signal resource, and the QCL type indicates the type of the target reference signal resource;
the QCL type includes one or more of a first QCL type, a second QCL type, and a third QCL type;
the first QCL type indicates that the target reference signal resource indicates the transmit beam information for the uplink transmission;
the second QCL type indicates that the target reference signal resource indicates the receive beam information for the downlink transmission; and
the third QCL type indicates that the target reference signal resource indicates the transmit beam information for the uplink transmission and the receive beam information for the downlink transmission.

In some possible implementations, the first parameter further includes a QCL type of the target reference signal resource, the QCL type includes typeD, and typeD indicates that the target reference signal resource indicates the transmit beam information for the uplink transmission or the receive beam information for the downlink transmission.

In some possible implementations, if the first parameter is indicated by signaling for scheduling the uplink transmission, typeD indicates that the target reference signal resource indicates the transmit beam information for the uplink transmission; or
if the first parameter is indicated by signaling for scheduling the downlink transmission, typeD indicates that the target reference signal resource indicates the receive beam information for the downlink transmission.

In some possible implementations, the first parameter further includes first information, and the first information indicates whether typeD is for determining the transmit beam information for the uplink transmission or for determining the receive beam information for the downlink transmission.

In some possible implementations, the first parameter further includes a QCL type of the target reference signal resource, the QCL type includes typeD, and typeD indicates that the target reference signal resource indicates both the transmit beam information for the uplink transmission and the receive beam information for the downlink transmission.

In some possible implementations, the transceiver unit 1030 is further configured to:
send first capability information, where the first capability information indicates that the terminal device supports use of QCL information of typeD to indicate both the transmit beam information for the uplink transmission and/or the receive beam information for the downlink transmission.

In some possible implementations, the first parameter further includes a QCL type of the target reference signal resource, the QCL type includes a first QCL type, and the first QCL type indicates that the target reference signal resource indicates the transmit beam information for the uplink transmission.

In some possible implementations, the first parameter further includes a QCL type of the target reference signal resource, the QCL type includes a third QCL type, and the third QCL type indicates that the target reference signal resource indicates both the transmit beam information for the uplink transmission and the receive beam information for the downlink transmission.

In some possible implementations, the first parameter further includes a QCL type of the target reference signal resource, the QCL type includes a fourth QCL type, and the fourth QCL type indicates that the target reference signal resource indicates common beam information.

In some possible implementations, the common beam information includes one or more of the following features:
being for both the uplink transmission and the downlink transmission;
being for transmission of a plurality of channels, where the plurality of channels include at least a control channel and a data channel; and
being for transmission of a plurality of cells.

In some possible implementations, the transceiver unit 1030 is further configured to:
send second capability information, where the second capability information indicates that the terminal device supports use of the fourth QCL type to indicate the common beam information, or the second capability information indicates that the terminal device supports use of a common beam.

In some possible implementations, the first parameter further indicates a type of the first parameter, and the type of the first parameter includes at least one of the following:
indicating the transmit beam information for the uplink transmission;
indicating the receive beam information for the downlink transmission; and
indicating both the transmit beam information for the uplink transmission and the receive beam information for the downlink transmission.

In some possible implementations, the first parameter includes at least one of the following information:
a component carrier/cell identifier of a cell to which a target reference signal belongs, a bandwidth part BWP identifier of the target reference signal, the target reference signal resource, the QCL type, type information of the first parameter, type information of the target reference signal resource, a path loss measurement reference signal resource, a power control parameter, an identifier of a terminal antenna panel, an identifier of a transmission site, a physical cell identifier PCI, and a sounding reference signal SRS resource for the uplink transmission.

In some possible implementations, the transceiver unit 1030 is further configured to:
send third capability information, where the third capability information indicates that the terminal device supports use of the first parameter to indicate the transmit beam information for the uplink transmission and/or the receive beam information for the downlink transmission.

In some possible implementations, the first parameter is indicated by one or more of the following signaling:
downlink control information DCI;
a media access control MAC control element CE; and
radio resource control RRC signaling.

In some possible implementations, when the first parameter includes the physical cell identifier, the first parameter is indicated by the RRC signaling;
when the first parameter includes at least two target reference signal resources, the first parameter is indicated by the MAC CE signaling or the RRC signaling;
when the first parameter includes the path loss measurement reference signal resource or the power control parameter, the first parameter is indicated by the RRC signaling or the MCE CE signaling;
when the first parameter includes the identifier of the terminal antenna panel, the first parameter is indicated by the RRC signaling or the MAC CE signaling;
when the first parameter includes the identifier of the transmission site, the first parameter is indicated by the RRC signaling, the MACE signaling, or the DCI; and
when the first parameter includes a new QCL type, the first parameter is indicated by the RRC signaling, a MAC CE signal, or the DCI signaling.

In some possible implementations, the processing unit 1010 is specifically configured to:
perform, after a time-to-apply after an indication moment of the first parameter, data transmission based on the transmit beam information and/or the receive beam information that are/is indicated by the first parameter, where the time-to-apply is related to content of the first parameter.

In some possible implementations, when the first parameter includes the PCI, the time-to-apply is a measurement gap of neighboring cell measurement/neighboring frequency measurement;
when the first parameter includes the identifier of the terminal antenna panel, the time-to-apply is a time required for activation of the terminal antenna panel;
when the first parameter includes the identifier of the transmission site, the time-to-apply is a time required for uplink timing of the transmission site; or
when the first parameter includes the path loss measurement reference signal resource, the time-to-apply is a time required for measurement of a path loss reference signal.

In some possible implementations, when each of a plurality of pieces of information included in the first parameter corresponds to one time-to-apply, a largest time-to-apply in a plurality of times-to-apply corresponding to the plurality of pieces of information is used as the time-to-apply of the first parameter; or
when each of a plurality of pieces of information included in the first parameter corresponds to one time-to-apply, each of the plurality of pieces of information is applicable by using the corresponding time-to-apply.

In some embodiments, when the apparatus 1000 is the network device or the chip or the circuit disposed in the network device, the processing unit 1010 is configured to determine first indication information, where the first indication information indicates a terminal device to perform data transmission based on a first parameter, and the first parameter indicates transmit beam information for uplink transmission and/or receive beam information for downlink transmission.

The transceiver unit 1030 is configured to send the first indication information to the terminal device.

In some embodiments, the transceiver unit 1030 is configured to send the first indication information to the terminal device, where the first indication information indicates the terminal device to perform data transmission based on the first parameter, and the first parameter indicates the transmit beam information for the uplink transmission and/or the receive beam information for the downlink transmission.

In some possible implementations, the first parameter includes a single target reference signal resource, and the target reference signal resource indicates both the transmit beam information for the uplink transmission and the receive beam information for the downlink transmission.

In some possible implementations, the first parameter includes a single target reference signal resource, and the target reference resource indicates the transmit beam information for the uplink transmission or the receive beam information for the downlink transmission.

In some possible implementations, the first parameter includes a single target reference signal resource, and the target reference resource indicates the transmit beam information for the uplink transmission or the receive beam information for the downlink transmission, or indicate both the transmit beam information for the uplink transmission and the receive beam information for the downlink transmission.

In some possible implementations, the first parameter includes a first target reference signal resource and a second target reference signal resource, the first target reference signal resource indicates the transmit beam information for the uplink transmission, and the second target reference signal resource indicates the receive beam information for the downlink transmission.

In some possible implementations, the indicating the transmit beam information for the uplink transmission and the indicating the receive beam information for the downlink transmission are determined based on an indication order of the first target reference signal resource and the second target reference signal resource in the first parameter.

In some possible implementations, the first parameter further indicates a type of a target reference signal resource in the first parameter, and the type of the target reference signal resource includes at least one of the following:
indicating the transmit beam information for the uplink transmission;
indicating the receive beam information for the downlink transmission; and
indicating both the transmit beam information for the uplink transmission and the receive beam information for the downlink transmission.

In some possible implementations, the first parameter further includes a type field corresponding to the target reference signal resource, and the type field indicates the type of the target reference signal resource corresponding to the type field.

In some possible implementations, the first parameter further includes a QCL type of the target reference signal resource, and the QCL type indicates the type of the target reference signal resource;
the QCL type includes one or more of a first QCL type, a second QCL type, and a third QCL type;
the first QCL type indicates that the target reference signal resource indicates the transmit beam information for the uplink transmission;
the second QCL type indicates that the target reference signal resource indicates the receive beam information for the downlink transmission; and
the third QCL type indicates that the target reference signal resource indicates the transmit beam information for the uplink transmission and the receive beam information for the downlink transmission.

In some possible implementations, the first parameter further includes a QCL type of the target reference signal resource, the QCL type includes typeD, and typeD indicates that the target reference signal resource indicates the transmit beam information for the uplink transmission or the receive beam information for the downlink transmission.

In some possible implementations, if the first parameter is indicated by signaling for scheduling the uplink transmission, typeD indicates that the target reference signal resource indicates the transmit beam information for the uplink transmission; or
if the first parameter is indicated by signaling for scheduling the downlink transmission, typeD indicates that the target reference signal resource indicates the receive beam information for the downlink transmission.

In some possible implementations, the first parameter further includes first information, and the first information indicates whether typeD is for determining the transmit beam information for the uplink transmission or for determining the receive beam information for the downlink transmission.

In some possible implementations, the first parameter further includes a QCL type of the target reference signal resource, the QCL type includes typeD, and typeD indicates that the target reference signal resource indicates both the transmit beam information for the uplink transmission and the receive beam information for the downlink transmission.

In some possible implementations, the transceiver unit 1030 is further configured to:
receive first capability information, where the first capability information indicates that the terminal device supports use of QCL information of typeD to indicate both the transmit beam information for the uplink transmission and/or the receive beam information for the downlink transmission.

In some possible implementations, the first parameter further includes a QCL type of the target reference signal resource, the QCL type includes a first QCL type, and the first QCL type indicates that the target reference signal resource indicates the transmit beam information for the uplink transmission.

In some possible implementations, the first parameter further includes a QCL type of the target reference signal resource, the QCL type includes a third QCL type, and the third QCL type indicates that the target reference signal resource indicates both the transmit beam information for the uplink transmission and the receive beam information for the downlink transmission.

In some possible implementations, the first parameter further includes a QCL type of the target reference signal resource, the QCL type includes a fourth QCL type, and the fourth QCL type indicates that the target reference signal resource indicates common beam information.

In some possible implementations, the common beam information includes one or more of the following features:
being for both the uplink transmission and the downlink transmission;
being for transmission of a plurality of channels, where the plurality of channels include at least a control channel and a data channel; and
being for transmission of a plurality of cells.

In some possible implementations, the transceiver unit 1030 is further configured to:
receive second capability information, where the second capability information indicates that the terminal device supports use of the fourth QCL type to indicate the common beam information, or the second capability information indicates that the terminal device supports use of a common beam.

In some possible implementations, the first parameter further indicates a type of the first parameter, and the type of the first parameter includes at least one of the following:
indicating the transmit beam information for the uplink transmission;
indicating the receive beam information for the downlink transmission; and
indicating both the transmit beam information for the uplink transmission and the receive beam information for the downlink transmission.

In some possible implementations, the first parameter includes at least one of the following information:
a component carrier/cell identifier of a cell to which a target reference signal belongs, a bandwidth part BWP identifier of the target reference signal, the target reference signal resource, the QCL type, type information of the first parameter, type information of the target reference signal resource, a path loss measurement reference signal resource, a power control parameter, an identifier of a terminal antenna panel, an identifier of a transmission site, a physical cell identifier PCI, and a sounding reference signal SRS resource for the uplink transmission.

In some possible implementations, the transceiver unit 1030 is further configured to:
receive third capability information, where the third capability information indicates that the terminal device supports use of the first parameter to indicate the transmit beam information for the uplink transmission and/or the receive beam information for the downlink transmission.

In some possible implementations, the first parameter is indicated by one or more of the following signaling:
downlink control information DCI;
a media access control MAC control element CE; and
radio resource control RRC signaling.

In some possible implementations, when the first parameter includes the physical cell identifier, the first parameter is indicated by the RRC signaling;
when the first parameter includes at least two target reference signal resources, the first parameter is indicated by the MAC CE signaling or the RRC signaling;
when the first parameter includes the path loss measurement reference signal resource or the power control parameter, the first parameter is indicated by the RRC signaling or the MCE CE signaling;
when the first parameter includes the identifier of the terminal antenna panel, the first parameter is indicated by the RRC signaling or the MAC CE signaling;
when the first parameter includes the identifier of the transmission site, the first parameter is indicated by the RRC signaling, the MACE signaling, or the DCI; and
when the first parameter includes a new QCL type, the first parameter is indicated by the RRC signaling, a MAC CE signal, or the DCI signaling.

In some possible implementations, when the first parameter includes the PCI, a time-to-apply of the first parameter is a measurement gap of neighboring cell measurement/neighboring frequency measurement;
when the first parameter includes the identifier of the terminal antenna panel, a time-to-apply of the first parameter is a time required for activation of the terminal antenna panel;
when the first parameter includes the identifier of the transmission site, a time-to-apply of the first parameter is a time required for uplink timing of the transmission site; or
when the first parameter includes the path loss measurement reference signal resource, a time-to-apply of the first parameter is a time required for measurement of a path loss reference signal, where
the time-to-apply of the first parameter is a time between an indication moment of the first parameter and a moment at which the terminal device starts to perform data transmission based on the first parameter.

In some possible implementations, when each of a plurality of pieces of information included in the first parameter corresponds to one time-to-apply, a largest time-to-apply in a plurality of times-to-apply corresponding to the plurality of pieces of information is the time-to-apply of the first parameter; or
when each of a plurality of pieces of information included in the first parameter corresponds to one time-to-apply, each of the plurality of pieces of information is applicable by using the corresponding time-to-apply.

The units in the foregoing embodiment may also be referred to as modules, circuits, or components.

Functions and actions of the modules or the units in the apparatus 1000 listed above are merely examples for description. When the apparatus 1000 is configured in or is the terminal device, the modules or the units in the apparatus 1000 may be configured to perform the actions or processing processes performed by the terminal device in the foregoing method. When the apparatus 1000 is configured in or is the network device, the modules or the units in the apparatus 1000 may be configured to perform the actions or processing processes performed by the network device in the foregoing method.

For concepts, explanations, detailed descriptions, and other steps of the apparatus 1000 that are related to the technical solutions provided in embodiments of this application, refer to the descriptions of the content in the foregoing method or another embodiment. Details are not described herein again.

It should be further understood that when the communication apparatus 1000 is the terminal device, the transceiver unit 1030 in the communication apparatus 1000 may correspond to a transceiver 2020 in a terminal device 2000 shown in FIG. 7, the processing unit 1010 in the communication apparatus 1000 may correspond to a processor 2010 in the terminal device 2000 shown in FIG. 7, and the storage unit 1020 in the communication apparatus 1000 may correspond to a memory 2030 in the terminal device 2000 shown in FIG. 7.

It should be further understood that, when the communication apparatus 1000 is the chip configured in the terminal device, the transceiver unit 1030 in the communication apparatus 1000 may be an input/output interface.

FIG. 7 is a schematic diagram of a structure of a terminal device 2000 according to an embodiment of this application. As shown in FIG. 7, the terminal device 2000 includes a processor 2010 and a transceiver 2020. Optionally, the terminal device 2000 further includes a memory 2030. The processor 2010, the transceiver 2002, and the memory 2030 may communicate with each other through an internal connection path, to transfer a control signal and/or a data signal. The memory 2030 is configured to store a computer program. The processor 2010 is configured to invoke the computer program from the memory 2030 and run the computer program, to control the transceiver 2020 to send and receive a signal. Optionally, the terminal device 2000 may further include an antenna 2040, configured to send, by using a radio signal, uplink data or uplink control signaling output by the transceiver 2020.

The processor 2010 and the memory 2030 may be integrated into a processing apparatus. The processor 2010 is configured to execute program code stored in the memory 2030, to implement the foregoing functions. During specific implementation, the memory 2030 may also be integrated into the processor 2010, or may be independent of the processor 2010.

The transceiver 2020 may correspond to the transceiver unit in FIG. 6, and may also be referred to as a communication unit. The transceiver 2020 may include a receiver (or referred to as a receiver or a receiver circuit) and a transmitter (or referred to as a transmitter or a transmitter circuit). The receiver is configured to receive a signal, and the transmitter is configured to transmit a signal.

It should be understood that, the terminal device 2000 shown in FIG. 7 can implement the processes related to the terminal device in the method embodiment shown in FIG. 5. The operations and/or the functions of the modules in the terminal device 2000 are separately for implementing corresponding procedures in the foregoing method embodiment. For details, refer to the descriptions in the foregoing method embodiment. To avoid repetition, detailed descriptions are properly omitted herein.

The processor 2010 may be configured to perform an action implemented inside the terminal device in the foregoing method embodiment, and the transceiver 2020 may be configured to perform an action of sending by the terminal device to the network device or receiving from the network device in the foregoing method embodiment. For details, refer to the descriptions in the foregoing method embodiment. Details are not described herein again.

Optionally, the terminal device 2000 may further include a power supply 2050 configured to supply power to various devices or circuits in the terminal device.

In addition, to make functions of the terminal device more perfect, the terminal device 2000 may further include one or more of an input unit 2060, a display unit 2070, an audio circuit 2080, a camera 2090, a sensor 2100, and the like, and the audio circuit may further include a speaker 2082, a microphone 2084, and the like.

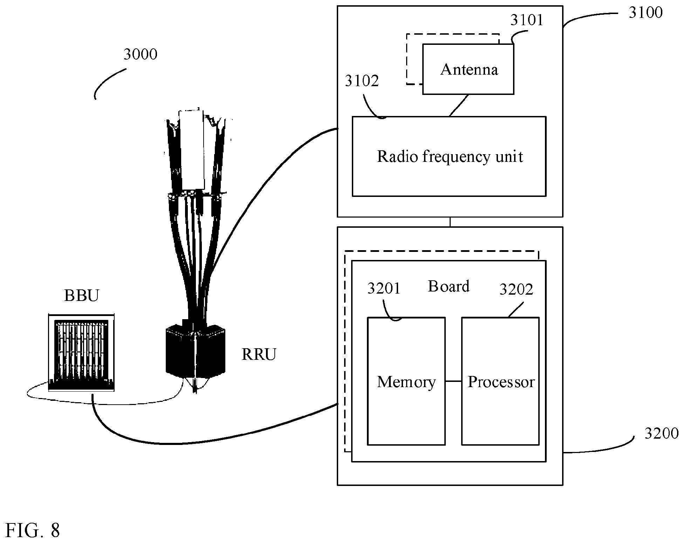

FIG. 8 is a schematic diagram of a structure of a network device according to an embodiment of this application. For example, FIG. 8 may be a schematic diagram of a structure of a base station. As shown in FIG. 8, the base station 3000 may be applied to the system shown in FIG. 1 or FIG. 2, to perform a function of the network device in the foregoing method embodiment.

The base station 3000 may include one or more radio frequency units such as a remote radio unit (remote radio unit, RRU) 3100 and one or more baseband units (baseband unit, BBU) (which may also be referred to as a digital unit, digital unit, DU) 3200. The RRU 3100 may be referred to as a transceiver unit, and corresponds to the transceiver unit 1030 in FIG. 6. Optionally, the RRU 3100 may also be referred to as a transceiver, a transceiver circuit, a transceiver, or the like, and may include at least one antenna 3101 and a radio frequency unit 3102. Optionally, the RRU 3100 may include a receiving unit and a sending unit. The receiving unit may correspond to a receiver (or referred to as a receiver or a receiver circuit), and the sending unit may correspond to a transmitter (or referred to as a transmitter or a transmitter circuit). The RRU 3100 is mainly configured to send and receive a radio frequency signal, and perform conversion between the radio frequency signal and a baseband signal. For example, the RRU 3100 is configured to send indication information to a terminal device. The BBU 3200 is mainly configured to perform baseband processing, control the base station, and so on. The RRU 3100 and the BBU 3200 may be physically disposed together, or may be physically disposed separately, that is, the base station is a distributed base station.

The BBU 3200 is a control center of the base station, may also be referred to as a processing unit, may correspond to the processing unit 1010 in FIG. 6, and is mainly configured to implement a baseband processing function, for example, channel coding, multiplexing, modulation, or spreading. For example, the BBU (the processing unit) may be configured to control the base station to perform an operation procedure related to the network device in the foregoing method embodiment, for example, to generate the foregoing indication information.

In an example, the BBU 3200 may include one or more boards, and a plurality of boards may jointly support a radio access network (for example, an LTE network) having a single access standard, or may separately support radio access networks (for example, the LTE network, a 5G network, or another network) having different access standards. The BBU 3200 further includes a memory 3201 and a processor 3202. The memory 3201 is configured to store necessary instructions and data. The processor 3202 is configured to control the base station to perform a necessary action, for example, is configured to control the base station to perform the operation procedure related to the network device in the foregoing method embodiment. The memory 3201 and the processor 3202 may serve one or more boards. In other words, the memory and the processor may be separately disposed on each board. Alternatively, the plurality of boards may share a same memory and processor. In addition, a necessary circuit may be further disposed on each board.

It should be understood that the base station 3000 shown in FIG. 8 can implement processes related to the network device in the method embodiment in FIG. 5. The operations and/or the functions of the modules in the base station 3000 are separately for implementing corresponding procedures in the foregoing method embodiment. For details, refer to the descriptions in the foregoing method embodiment. To avoid repetition, detailed descriptions are properly omitted herein.

The BBU 3200 may be configured to perform an action implemented inside the network device in the foregoing method embodiment, and the RRU 3100 may be configured to perform an action of sending by the network device to the terminal device or receiving from the terminal device in the foregoing method embodiment. For details, refer to the descriptions in the foregoing method embodiment. Details are not described herein again.

An embodiment of this application further provides a processing apparatus, including a processor and an interface. The processor is configured to perform the communication method in any one of the foregoing method embodiments.

It should be understood that the processing apparatus may be a chip. For example, the processing apparatus may be a field programmable gate array (field programmable gate array, FPGA), an application specific integrated chip (application specific integrated circuit, ASIC), a system on chip (system on chip, SoC), a central processing unit (central processor unit, CPU), a network processor (network processor, NP), a digital signal processing circuit (digital signal processor, DSP), a micro controller unit (micro controller unit, MCU), a programmable controller (programmable logic device, PLD), or another integrated chip.

In an implementation process, the steps in the foregoing method may be implemented by using an integrated logic circuit of hardware in the processor, or by using instructions in a form of software. The steps of the method disclosed with reference to embodiments of this application may be directly performed and completed by a hardware processor, or may be performed and completed by using a combination of hardware and software modules in the processor. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory, and completes the steps in the foregoing method in combination with hardware of the processor. To avoid repetition, details are not described herein again.

It should be noted that the processor in embodiments of this application may be an integrated circuit chip, and has a signal processing capability. In an implementation process, the steps in the foregoing method embodiment may be implemented by using an integrated logic circuit of hardware in the processor, or by using instructions in a form of software. The processor may be a general-purpose processor, a digital signal processor (DSP), an application specific integrated circuit (ASIC), a field programmable gate array (FPGA) or another programmable logic device, a discrete gate or a transistor logic device, or a discrete hardware component. The processor may implement or perform the methods, steps, and logical block diagrams disclosed in embodiments of this application. The general-purpose processor may be a microprocessor, or the processor may be any conventional processor or the like. The steps of the method disclosed with reference to embodiments of this application may be directly performed and completed by a hardware decoding processor, or may be performed and completed by using a combination of hardware and software modules in the decoding processor. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory, and completes the steps in the foregoing method in combination with hardware of the processor.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) that is used as an external cache. By way of example but not limitative description, many forms of RAMs are available, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory in the system and method described in this specification aims to include, but not limited to, these memories and any memory of another appropriate type.

According to the method provided in embodiments of this application, this application further provides a computer program product. The computer program product includes computer program code. When the computer program code is run on a computer, the computer is enabled to perform the data transmission method in the embodiment shown in FIG. 5.

According to the method provided in embodiments of this application, this application further provides a computer-readable medium. The computer-readable medium stores program code. When the program code is run on a computer, the computer is enabled to perform the data transmission method in the embodiment shown in FIG. 5.

According to the method provided in embodiments of this application, this application further provides a system, including the foregoing one or more terminal devices and one or more network devices.

All or some of the foregoing embodiments may be implemented by using software, hardware, firmware, or any combination thereof. When software is used for implementation, all or some of embodiments may be implemented in a form of a computer program product. The computer program product includes one or more computer instructions. When the computer instructions are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid state disk (solid state disk, SSD)), or the like.

The network device and the terminal device in the foregoing apparatus embodiments completely correspond to the terminal device or network device in the method embodiment. A corresponding module or unit performs a corresponding step. For example, a communication unit (a transceiver) performs a receiving or sending step in the method embodiment, and a processing unit (a processor) performs a step other than the sending or receiving step. For a function of a specific unit, refer to a corresponding method embodiment. There may be one or more processors.

In this application, "at least one" refers to one or more, and "a plurality of" refers to two or more. "And/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. "At least one of the following" or a similar expression thereof means any combination of these items, and includes a singular item or any combination of plural items. For example, at least one of a, b, or c may indicate a, b, c, a and b, a and c, b and c, or a, b, and c, where a, b, and c may be singular or plural.

It should be understood that some specific features, structures, or features in embodiments of this specification are included in at least one embodiment of this application. These particular features, structures, or characteristics may be combined in one or more embodiments in any proper manner. It should be understood that, in various embodiments of this application, sequence numbers of the foregoing processes do not mean an execution sequence. An execution sequence of the processes should be determined based on functions and internal logic of the processes, and should not constitute any limitation on an implementation process of embodiments of this application. In addition, descriptions of the steps in the figure are merely examples, and shall not constitute any limitation on this application.

Terms such as "component", "module", and "system" used in this specification indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a computing device and an application that runs on the computing device may be components. One or more components may reside within a process and/or an execution thread, and a component may be located on one computer and/or distributed between two or more computers. In addition, these components may be executed by various computer-readable media that store various data structures. The components may communicate by using a local and/or remote process and according to, for example, a signal having one or more data packets (for example, data from two components interacting with another component in a local system, in a distributed system, and/or across a network such as the internet interacting with another system by using a signal).

A person of ordinary skill in the art may be aware that illustrative logical blocks (illustrative logical block) and steps (step) described with reference to embodiments disclosed in this specification can be implemented by electronic hardware or a combination of computer software and electronic hardware. Whether the functions are performed by hardware or software depends on particular applications and design constraints of the technical solutions. A person skilled in the art may use different methods to implement the described functions for all particular applications, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiment. Details are not described herein again.

In the several embodiments provided in this application, it should be understood that the disclosed systems, apparatuses, and methods may be implemented in other manners. For example, the foregoing apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, that is, may be located in one position, or may be distributed on a plurality of network units. Some or all of the units may be selected based on an actual requirement to achieve the objectives of the solutions in embodiments

In addition, functional units in embodiments of this application may be integrated into one processing unit, each unit may exist alone physically, or two or more units may be integrated into one unit.

In the foregoing embodiments, all or some of the functions of the functional units may be implemented by using software, hardware, firmware, or any combination thereof. When software is used for implementation, all or some of the functions may be implemented in a form of a computer program product. The computer program product includes one or more computer instructions (programs). When the computer program instructions (programs) are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

When the functions are implemented in the form of a software functional unit and sold or used as an independent product, the functions may be stored in a computer-readable storage medium. Based on such an understanding, the technical solutions in this application essentially, or the part contributing to the prior art, or some of the technical solutions may be implemented in a form of a software product. The computer software product is stored in a storage medium, and includes several instructions for instructing a computer device (which may be a personal computer, a server, a network device, or the like) to perform all or some of the steps of the methods in embodiments of this application. The foregoing storage medium includes: any medium that can store program code, such as a USB flash drive, a removable hard disk, a read-only memory (read-only memory, ROM), a random access memory (random access memory, RAM), a magnetic disk, or a compact disc.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A data transmission method, comprising:
receiving first indication information, wherein the first indication information indicates a terminal device to perform data transmission based on a first parameter, and the first parameter indicates transmit beam information for uplink transmission and/or receive beam information for downlink transmission; and
performing data transmission based on the transmit beam information and/or the receive beam information that are/is indicated by the first parameter.

2. The method according to claim 1, wherein the first parameter comprises a single target reference signal resource, and the target reference signal resource indicates both the transmit beam information for the uplink transmission and the receive beam information for the downlink transmission.

3. The method according to claim 1, wherein the first parameter comprises a single target reference signal resource, and the target reference resource indicates the transmit beam information for the uplink transmission or the receive beam information for the downlink transmission.

4. The method according to claim 1, wherein the first parameter comprises a single target reference signal resource, and the target reference resource indicates the transmit beam information for the uplink transmission or the receive beam information for the downlink transmission, or indicate both the transmit beam information for the uplink transmission and the receive beam information for the downlink transmission.

5. The method according to claim 1, wherein the first parameter comprises a first target reference signal resource and a second target reference signal resource, the first target reference signal resource indicates the transmit beam information for the uplink transmission, and the second target reference signal resource indicates the receive beam information for the downlink transmission.

6. The method according to claim 5, wherein the indicating the transmit beam information for the uplink transmission and the indicating the receive beam information for the downlink transmission are determined based on an indication order of the first target reference signal resource and the second target reference signal resource in the first parameter.

7. The method according to any one of claims 2 to 6, wherein the first parameter further indicates a type of a target reference signal resource in the first parameter, and the type of the target reference signal resource comprises at least one of the following:
indicating the transmit beam information for the uplink transmission;
indicating the receive beam information for the downlink transmission; and
indicating both the transmit beam information for the uplink transmission and the receive beam information for the downlink transmission.

8. The method according to claim 7, wherein the first parameter further comprises a type field corresponding to the target reference signal resource, and the type field indicates the type of the target reference signal resource corresponding to the type field.

9. The method according to claim 7, wherein the first parameter further comprises a QCL type of the target reference signal resource, and the QCL type indicates the type of the target reference signal resource;
the QCL type comprises one or more of a first QCL type, a second QCL type, and a third QCL type;
the first QCL type indicates that the target reference signal resource indicates the transmit beam information for the uplink transmission;
the second QCL type indicates that the target reference signal resource indicates the receive beam information for the downlink transmission; and
the third QCL type indicates that the target reference signal resource indicates the transmit beam information for the uplink transmission and the receive beam information for the downlink transmission.

10. The method according to claim 7, wherein the first parameter further comprises a QCL type of the target reference signal resource, the QCL type comprises typeD, and typeD indicates that the target reference signal resource indicates the transmit beam information for the uplink transmission or the receive beam information for the downlink transmission.

11. The method according to claim 10, wherein if the first parameter is indicated by signaling for scheduling the uplink transmission, typeD indicates that the target reference signal resource indicates the transmit beam information for the uplink transmission; or
if the first parameter is indicated by signaling for scheduling the downlink transmission, typeD indicates that the target reference signal resource indicates the receive beam information for the downlink transmission.

12. The method according to claim 10, wherein the first parameter further comprises first information, and the first information indicates whether typeD is for determining the transmit beam information for the uplink transmission or for determining the receive beam information for the downlink transmission.

13. The method according to claim 7, wherein the first parameter further comprises a QCL type of the target reference signal resource, the QCL type comprises typeD, and typeD indicates that the target reference signal resource indicates both the transmit beam information for the uplink transmission and the receive beam information for the downlink transmission.

14. The method according to claim 13, wherein the method further comprises:
sending first capability information, wherein the first capability information indicates that the terminal device supports use of QCL information of typeD to indicate both the transmit beam information for the uplink transmission and/or the receive beam information for the downlink transmission.

15. The method according to claim 7, wherein the first parameter further comprises a QCL type of the target reference signal resource, the QCL type comprises a first QCL type, and the first QCL type indicates that the target reference signal resource indicates the transmit beam information for the uplink transmission.

16. The method according to claim 7, wherein the first parameter further comprises a QCL type of the target reference signal resource, the QCL type comprises a third QCL type, and the third QCL type indicates that the target reference signal resource indicates both the transmit beam information for the uplink transmission and the receive beam information for the downlink transmission.

17. The method according to claim 7, wherein the first parameter further comprises a QCL type of the target reference signal resource, the QCL type comprises a fourth QCL type, and the fourth QCL type indicates that the target reference signal resource indicates common beam information.

18. The method according to claim 17, wherein the common beam information comprises one or more of the following features:
being for both the uplink transmission and the downlink transmission;
being for transmission of a plurality of channels, wherein the plurality of channels comprise at least a control channel and a data channel; and
being for transmission of a plurality of cells.

19. The method according to claim 17, wherein the method further comprises:
sending second capability information, wherein the second capability information indicates that the terminal device supports use of the fourth QCL type to indicate the common beam information, or the second capability information indicates that the terminal device supports use of a common beam.

20. The method according to any one of claims 1 to 19, wherein the first parameter further indicates a type of the first parameter, and the type of the first parameter comprises at least one of the following:
indicating the transmit beam information for the uplink transmission;
indicating the receive beam information for the downlink transmission; and
indicating both the transmit beam information for the uplink transmission and the receive beam information for the downlink transmission.

21. The method according to any one of claims 1 to 20, wherein the first parameter comprises at least one of the following information:
a component carrier/cell identifier of a cell to which a target reference signal belongs, a bandwidth part BWP identifier of the target reference signal, the target reference signal resource, the QCL type, type information of the first parameter, type information of the target reference signal resource, a path loss measurement reference signal resource, a power control parameter, an identifier of a terminal antenna panel, an identifier of a transmission site, a physical cell identifier PCI, and a sounding reference signal SRS resource for the uplink transmission.

22. The method according to any one of claims 1 to 21, wherein the method further comprises:
sending third capability information, wherein the third capability information indicates that the terminal device supports use of the first parameter to indicate the transmit beam information for the uplink transmission and/or the receive beam information for the downlink transmission.

23. The method according to any one of claims 1 to 22, wherein the first parameter is indicated by one or more of the following signaling:
downlink control information DCI;
a media access control MAC control element CE; and
radio resource control RRC signaling.

24. The method according to claim 23, wherein
when the first parameter comprises the PCI, the first parameter is indicated by the RRC signaling;
when the first parameter comprises at least two target reference signal resources, the first parameter is indicated by the MAC CE signaling or the RRC signaling;
when the first parameter comprises the path loss measurement reference signal resource or the power control parameter, the first parameter is indicated by the RRC signaling or the MCE CE signaling;
when the first parameter comprises the identifier of the terminal antenna panel, the first parameter is indicated by the RRC signaling or the MAC CE signaling;
when the first parameter comprises the identifier of the transmission site, the first parameter is indicated by the RRC signaling, the MACE signaling, or the DCI; and
when the first parameter comprises a new QCL type, the first parameter is indicated by the RRC signaling, a MAC CE signal, or the DCI signaling.

25. The method according to any one of claims 1 to 24, wherein the performing data transmission based on the transmit beam information and/or the receive beam information that are/is indicated by the first parameter comprises:
performing, after a time-to-apply after an indication moment of the first parameter, data transmission based on the transmit beam information and/or the receive beam information that are/is indicated by the first parameter, wherein the time-to-apply is related to content of the first parameter.

26. The method according to claim 25, wherein
when the first parameter comprises the PCI, the time-to-apply is a measurement gap of neighboring cell measurement/neighboring frequency measurement;
when the first parameter comprises the identifier of the terminal antenna panel, the time-to-apply is a time required for activation of the terminal antenna panel;
when the first parameter comprises the identifier of the transmission site, the time-to-apply is a time required for uplink timing of the transmission site; or
when the first parameter comprises the path loss measurement reference signal resource, the time-to-apply is a time required for measurement of a path loss reference signal.

27. The method according to claim 25 or 26, wherein when each of a plurality of pieces of information comprised in the first parameter corresponds to one time-to-apply, a largest time-to-apply in a plurality of times-to-apply corresponding to the plurality of pieces of information is used as the time-to-apply of the first parameter; or
when each of a plurality of pieces of information comprised in the first parameter corresponds to one time-to-apply, each of the plurality of pieces of information is applicable by using the corresponding time-to-apply.

28. A data transmission method, comprising:
determining first indication information, wherein the first indication information indicates a terminal device to perform data transmission based on a first parameter, and the first parameter indicates transmit beam information for uplink transmission and/or receive beam information for downlink transmission; and
sending the first indication information to the terminal device.

29. The method according to claim 28, wherein the first parameter comprises a single target reference signal resource, and the target reference signal resource indicates both the transmit beam information for the uplink transmission and the receive beam information for the downlink transmission.

30. The method according to claim 28, wherein the first parameter comprises a single target reference signal resource, and the target reference resource indicates the transmit beam information for the uplink transmission or the receive beam information for the downlink transmission.

31. The method according to claim 28, wherein the first parameter comprises a single target reference signal resource, and the target reference resource indicates the transmit beam information for the uplink transmission or the receive beam information for the downlink transmission, or indicate both the transmit beam information for the uplink transmission and the receive beam information for the downlink transmission.

32. The method according to claim 28, wherein the first parameter comprises a first target reference signal resource and a second target reference signal resource, the first target reference signal resource indicates the transmit beam information for the uplink transmission, and the second target reference signal resource indicates the receive beam information for the downlink transmission.

33. The method according to claim 32, wherein the indicating the transmit beam information for the uplink transmission and the indicating the receive beam information for the downlink transmission are determined based on an indication order of the first target reference signal resource and the second target reference signal resource in the first parameter.

34. The method according to any one of claims 29 to 33, wherein the first parameter further indicates a type of a target reference signal resource in the first parameter, and the type of the target reference signal resource comprises at least one of the following:
indicating the transmit beam information for the uplink transmission;
indicating the receive beam information for the downlink transmission; and
indicating both the transmit beam information for the uplink transmission and the receive beam information for the downlink transmission.

35. The method according to claim 34, wherein the first parameter further comprises a type field corresponding to the target reference signal resource, and the type field indicates the type of the target reference signal resource corresponding to the type field.

36. The method according to claim 34, wherein the first parameter further comprises a QCL type of the target reference signal resource, and the QCL type indicates the type of the target reference signal resource;
the QCL type comprises one or more of a first QCL type, a second QCL type, and a third QCL type;
the first QCL type indicates that the target reference signal resource indicates the transmit beam information for the uplink transmission;
the second QCL type indicates that the target reference signal resource indicates the receive beam information for the downlink transmission; and
the third QCL type indicates that the target reference signal resource indicates the transmit beam information for the uplink transmission and the receive beam information for the downlink transmission.

37. The method according to claim 34, wherein the first parameter further comprises a QCL type of the target reference signal resource, the QCL type comprises typeD, and typeD indicates that the target reference signal resource indicates the transmit beam information for the uplink transmission or the receive beam information for the downlink transmission.

38. The method according to claim 37, wherein if the first parameter is indicated by signaling for scheduling the uplink transmission, typeD indicates that the target reference signal resource indicates the transmit beam information for the uplink transmission; or
if the first parameter is indicated by signaling for scheduling the downlink transmission, typeD indicates that the target reference signal resource indicates the receive beam information for the downlink transmission.

39. The method according to claim 37, wherein the first parameter further comprises first information, and the first information indicates whether typeD is for determining the transmit beam information for the uplink transmission or for determining the receive beam information for the downlink transmission.

40. The method according to claim 34, wherein the first parameter further comprises a QCL type of the target reference signal resource, the QCL type comprises typeD, and typeD indicates that the target reference signal resource indicates both the transmit beam information for the uplink transmission and the receive beam information for the downlink transmission.

41. The method according to claim 40, wherein the method further comprises:
receiving first capability information, wherein the first capability information indicates that the terminal device supports use of QCL information of typeD to indicate both the transmit beam information for the uplink transmission and/or the receive beam information for the downlink transmission.

42. The method according to claim 34, wherein the first parameter further comprises a QCL type of the target reference signal resource, the QCL type comprises a first QCL type, and the first QCL type indicates that the target reference signal resource indicates the transmit beam information for the uplink transmission.

43. The method according to claim 34, wherein the first parameter further comprises a QCL type of the target reference signal resource, the QCL type comprises a third QCL type, and the third QCL type indicates that the target reference signal resource indicates both the transmit beam information for the uplink transmission and the receive beam information for the downlink transmission.

44. The method according to claim 34, wherein the first parameter further comprises a QCL type of the target reference signal resource, the QCL type comprises a fourth QCL type, and the fourth QCL type indicates that the target reference signal resource indicates common beam information.

45. The method according to claim 44, wherein the common beam information comprises one or more of the following features:
being for both the uplink transmission and the downlink transmission;
being for transmission of a plurality of channels, wherein the plurality of channels comprise at least a control channel and a data channel; and
being for transmission of a plurality of cells.

46. The method according to claim 44, wherein the method further comprises:
receiving second capability information, wherein the second capability information indicates that the terminal device supports use of the fourth QCL type to indicate the common beam information, or the second capability information indicates that the terminal device supports use of a common beam.

47. The method according to any one of claims 28 to 46, wherein the first parameter further indicates a type of the first parameter, and the type of the first parameter comprises at least one of the following:
indicating the transmit beam information for the uplink transmission;
indicating the receive beam information for the downlink transmission; and
indicating both the transmit beam information for the uplink transmission and the receive beam information for the downlink transmission.

48. The method according to any one of claims 28 to 47, wherein the first parameter comprises at least one of the following information:
a component carrier/cell identifier of a cell to which a target reference signal belongs, a bandwidth part BWP identifier of the target reference signal, the target reference signal resource, the QCL type, type information of the first parameter, type information of the target reference signal resource, a path loss measurement reference signal resource, a power control parameter, an identifier of a terminal antenna panel, an identifier of a transmission site, a physical cell identifier PCI, and a sounding reference signal SRS resource for the uplink transmission.

49. The method according to any one of claims 28 to 48, wherein the method further comprises:
receiving third capability information, wherein the third capability information indicates that the terminal device supports use of the first parameter to indicate the transmit beam information for the uplink transmission and/or the receive beam information for the downlink transmission.

50. The method according to any one of claims 28 to 49, wherein the first parameter is indicated by one or more of the following signaling:
downlink control information DCI;
a media access control MAC control element CE; and
radio resource control RRC signaling.

51. The method according to claim 50, wherein
when the first parameter comprises the physical cell identifier, the first parameter is indicated by the RRC signaling;
when the first parameter comprises at least two target reference signal resources, the first parameter is indicated by the MAC CE signaling or the RRC signaling;
when the first parameter comprises the path loss measurement reference signal resource or the power control parameter, the first parameter is indicated by the RRC signaling or the MCE CE signaling;
when the first parameter comprises the identifier of the terminal antenna panel, the first parameter is indicated by the RRC signaling or the MAC CE signaling;
when the first parameter comprises the identifier of the transmission site, the first parameter is indicated by the RRC signaling, the MACE signaling, or the DCI; and
when the first parameter comprises a new QCL type, the first parameter is indicated by the RRC signaling, a MAC CE signal, or the DCI signaling.

52. The method according to any one of claims 28 to 51, wherein
when the first parameter comprises the PCI, a time-to-apply of the first parameter is a measurement gap of neighboring cell measurement/neighboring frequency measurement;
when the first parameter comprises the identifier of the terminal antenna panel, a time-to-apply of the first parameter is a time required for activation of the terminal antenna panel;
when the first parameter comprises the identifier of the transmission site, a time-to-apply of the first parameter is a time required for uplink timing of the transmission site; or
when the first parameter comprises the path loss measurement reference signal resource, a time-to-apply of the first parameter is a time required for measurement of a path loss reference signal, wherein
the time-to-apply of the first parameter is a time between an indication moment of the first parameter and a moment at which the terminal device starts to perform data transmission based on the first parameter.

53. The method according to claim 52, wherein when each of a plurality of pieces of information comprised in the first parameter corresponds to one time-to-apply, a largest time-to-apply in a plurality of times-to-apply corresponding to the plurality of pieces of information is the time-to-apply of the first parameter; or
when each of a plurality of pieces of information comprised in the first parameter corresponds to one time-to-apply, each of the plurality of pieces of information is applicable by using the corresponding time-to-apply.

54. A wireless communication apparatus, comprising:
a transceiver module, configured to receive first indication information, wherein the first indication information indicates a terminal device to perform data transmission based on a first parameter, and the first parameter indicates transmit beam information for uplink transmission and/or receive beam information for downlink transmission; and
a processing module, configured to perform data transmission based on the transmit beam information and/or the receive beam information that are/is indicated by the first parameter.

55. A wireless communication apparatus, comprising:
a processing module, configured to determine first indication information, wherein the first indication information indicates a terminal device to perform data transmission based on a first parameter, and the first parameter indicates transmit beam information for uplink transmission and/or receive beam information for downlink transmission; and
a transceiver module, configured to send the first indication information to the terminal device.

56. A communication apparatus, comprising a processor, wherein the processor is configured to execute a computer program stored in a memory, to perform the method according to any one of claims 1 to 27.

57. The communication apparatus according to claim 56, wherein the communication apparatus further comprises the memory.

58. A communication apparatus, comprising a processor, wherein the processor is configured to execute a computer program stored in a memory, to perform the method according to any one of claims 28 to 53.

59. The communication apparatus according to claim 58, wherein the communication apparatus further comprises the memory.

60. A communication chip, wherein the chip comprises:
a processor and a communication interface, wherein the processor is configured to invoke instructions from the communication interface and run the instructions, and the method according to any one of claims 1 to 27 is implemented when the processor executes the instructions.

61. A communication chip, wherein the chip comprises:
a processor and a communication interface, wherein the processor is configured to invoke instructions from the communication interface and run the instructions, and the method according to any one of claims 28 to 53 is implemented when the processor executes the instructions.

62. A communication system, comprising an apparatus configured to perform the method according to any one of claims 1 to 27 and an apparatus configured to perform the method according to any one of claims 28 to 53.
